# EUROPEAN PATENT APPLICATION

(11) **EP 4 272 854 A1**
(43) Date of publication of application: **08.11.2023**
(21) Application number: 21921920.1
(22) Date of filing: 30.01.2021
(51) Int. Cl.: B01D 35/16, B01D 35/12, B01D 29/68

(54) **FILTERING SYSTEM, AIR-CONDITIONING SYSTEM, DATA CENTER, AND CLEANING METHOD FOR FILTERING SYSTEM**

(71) Applicant: Huawei Digital Power Technologies Co., Ltd., Shenzhen, Guangdong 518043 (CN)
(72) Inventor: DUAN, Xiaoli, Shenzhen, Guangdong 518129 (CN); WEI, Bo, Shenzhen, Guangdong 518129 (CN); JING, Qiang, Shenzhen, Guangdong 518129 (CN)
(74) Representative: Isarpatent
(86) International application number: PCT/CN2021/074560
(87) International publication number: WO 2022/160319

(57) **Abstract**

This application provides a filtering system, an air conditioning system, a data center, and a cleaning method for a filtering system. The filtering system includes a total liquid inlet, a total liquid outlet, a first Y-shaped strainer, and a second Y-shaped strainer. The first Y-shaped strainer includes a first liquid flow port, a second liquid flow port, and a first drainage port, the first liquid flow port is connected to the total liquid inlet by using a first pipeline, the second liquid flow port is connected to the total liquid outlet by using a second pipeline, and the first drainage port is connected to a first waste liquid area by using a third pipeline. The second Y-shaped strainer includes a third liquid flow port, a fourth liquid flow port, and a second drainage port, the third liquid flow port is connected to the total liquid inlet by using a fourth pipeline, the fourth liquid flow port is connected to the total liquid outlet by using a fifth pipeline, and the second drainage port is connected to a second waste liquid area by using a sixth pipeline. A switch valve is disposed in each of the foregoing pipelines. Opening and closing of each switch valve are selected, so that a specific working state of the filtering system can be designed, and a strainer is cleaned without shutting down the system.

## Description

### TECHNICAL FIELD

This application relates to the field of air conditioning cleaning technologies, and in particular, to a filtering system, an air conditioning system, a data center, and a cleaning method for a filtering system.

### BACKGROUND

An air conditioning system in an equipment room is a device for cooling, heating, humidifying, ventilating, and purifying air in the equipment room, and can provide an air environment with a proper temperature and proper humidity for persons and devices in the equipment room. As refrigeration technologies continuously evolve, an air conditioning architecture tends to be rich, for example, a chilled water air conditioner, an evaporative cooling air conditioner, and a liquid cooling distribution unit. In an air conditioning system related to a water system, a Y-shaped strainer is usually used to filter and clean the water system to reduce a risk of back-end blocking. In an application process, the Y-shaped strainer has problems such as high blocking frequency and a difficulty in cleaning. In a conventional technology, the Y-shaped strainer is usually cleaned periodically, or the Y-shaped strainer is cleaned when the filtering system is blocked. In addition, the dirty and blocked Y-shaped strainer is manually removed for cleaning, or the Y-shaped strainer is replaced. In addition, a cleaning action usually requires the entire air conditioning system to be shut down for maintenance. This is time-consuming and laborious. When the Y-shaped strainer is shut down, a problem of a local heating point may occur in the equipment room. If the strainer is blocked and cannot be cleaned in a timely manner, a cooler in the equipment room may be shut down. In addition, a plurality of times of disassembly/assembly may cause a pipeline sealing failure and water leakage.

### SUMMARY

This application provides a filtering system, an air conditioning system, a data center, and a cleaning method for a filtering system, to clean a strainer of the filtering system without shutting down the system, so as to enable the filtering system to maintain a working state, reduce a quantity of times of disassembly, reduce a frequency of liquid leakage, and improve system reliability.

According to an aspect, this application provides a filtering system, where the filtering system includes a total liquid inlet, a total liquid outlet, and a first Y-shaped strainer and a second Y-shaped strainer that are located between the total liquid inlet and the total liquid outlet. The first Y-shaped strainer includes a first liquid flow port, a second liquid flow port, and a first drainage port, the first liquid flow port is connected to the total liquid inlet by using a first pipeline, and the second liquid flow port is connected to the total liquid outlet by using a second pipeline. When the first Y-shaped strainer is in a filtering working state, liquid enters the filtering system from the total liquid inlet, flows through the first pipeline, flows into the first Y-shaped strainer from the first liquid flow port, flows out of the first Y-shaped strainer from the second liquid flow port, and flows out from the total liquid outlet after flowing through the second pipeline, to complete a process of filtering the liquid by the first Y-shaped strainer. The first drainage port is connected to a first waste liquid area by using a third pipeline, so that waste liquid flowing out of the first Y-shaped strainer can be discharged to the first waste liquid area by using the third pipeline. Similarly, the second Y-shaped strainer includes a third liquid flow port, a fourth liquid flow port, and a second drainage port, the third liquid flow port is connected to the total liquid inlet by using a fourth pipeline, and the fourth liquid flow port is connected to the total liquid outlet by using a fifth pipeline. Similar to the foregoing filtering process of the first Y-shaped strainer, liquid successively passes through the total liquid inlet, the fourth pipeline, the third liquid flow port, the second Y-shaped strainer, the fourth liquid flow port, the fifth pipeline, and the total liquid outlet, and then flows out of the filtering system, to complete the filtering process once. The second drainage port is connected to a second waste liquid area by using a sixth pipeline, so that waste liquid flowing out of the second Y-shaped strainer can be discharged to the second waste liquid area by using the sixth pipeline. A switch valve is disposed in each of the foregoing pipelines. Opening and closing of each switch valve are selected, so that a specific working state of the filtering system can be designed, namely, a flow path of the liquid in the filtering system. Specifically, a first switch valve is disposed in the first pipeline, a second switch valve is disposed in the second pipeline, a third switch valve is disposed in the third pipeline, a fourth switch valve is disposed in the fourth pipeline, a fifth switch valve is disposed in the fifth pipeline, and a sixth switch valve is disposed in the sixth pipeline.

Opening and closing states of each switch valve are adjusted, so that different working modes of the filtering system can be selected. In a first working mode, only one Y-shaped strainer participates in filtering working, and the other Y-shaped strainer does not participate in any working. Specifically, only the first Y-shaped strainer may participate in filtering working, that is, the first switch valve and the second switch valve are opened, and the third switch valve, the fourth switch valve, the fifth switch valve, and the sixth switch valve are closed. In a second working mode, the second Y-shaped strainer participates in filtering working, and the first Y-shaped strainer is backwashed, that is, the second switch valve, the third switch valve, the fourth switch valve, and the fifth switch valve are opened, and the first switch valve and the sixth switch valve are closed. In a third working mode, the first Y-shaped strainer participates in filtering working, and the second Y-shaped strainer is backwashed, that is, the first switch valve, the second switch valve, the fifth switch valve, and the sixth switch valve are opened, and the third switch valve and the fourth switch valve are closed. Alternatively, there may be a fourth working mode, where only the second Y-shaped strainer participates in working, that is, the fourth switch valve and the fifth switch valve are opened, and the first switch valve, the second switch valve, the third switch valve, and the sixth switch valve are closed. The fourth working mode is essentially the same as the first working mode, where only one Y-shaped strainer participates in working.

In this solution, a combination of opening and closing of the switch valves is controlled, so that the filtering system can be controlled to be switched between the foregoing working modes. Therefore, the Y-shaped strainer can be cleaned when working of the filtering system is not stopped. This is convenient, time-saving, and labor-saving. In addition, a working state of a working system in which the filtering system is located is not affected. In addition, a liquid leakage problem caused by frequent disassembly can be avoided, to improve system reliability.

The filtering system may further include a first differential pressure detection apparatus, a second differential pressure detection apparatus, and a third differential pressure detection apparatus. The first differential pressure detection apparatus is connected between the total liquid inlet and the total liquid outlet, is configured to detect a differential pressure between the total liquid inlet and the total liquid outlet, and can be configured to determine whether a currently working Y-shaped strainer is blocked or a blocking degree thereof. The second differential pressure detection apparatus is connected between the second pipeline and the third pipeline, is configured to detect a differential pressure between the second pipeline and the third pipeline, and can be configured to determine cleaning effect of the first Y-shaped strainer. The third differential pressure detection apparatus is connected between the fifth pipeline and the sixth pipeline, is configured to detect a differential pressure between the fifth pipeline and the sixth pipeline, and can be configured to determine cleaning effect of the second Y-shaped strainer. In this solution, a blocking status of a corresponding Y-shaped strainer may be accurately determined by using a differential pressure detection apparatus.

Specific types of the first differential pressure detection apparatus, the second differential pressure detection apparatus, and the third differential pressure detection apparatus are not limited, the differential pressure detection apparatus may be a differential pressure sensor or a differential pressure switch, and this may be selected by a user based on an actual requirement.

The filtering system may further include an ultrasonic generator. Specifically, an ultrasonic generator may be disposed in the first Y-shaped strainer or the second Y-shaped strainer, or an ultrasonic generator is disposed in each of the first Y-shaped strainer and the second Y-shaped strainer. With a vibration effect of an ultrasonic wave, dirt adhered to a filter screen may be loosened, then fall off under an action of backwashing liquid, and flow out of the filtering system, so that cleaning strength of cleaning the filter screen of the Y-shaped strainer is improved. In particular, when a cleaning criterion is not met through backwashing, the manner of using the ultrasonic generator helps cleaning effect meet the standard. Specifically, the ultrasonic generator may be started when the Y-shaped strainer is backwashed, or the ultrasonic generator may be started after the cleaning criterion is not met through backwashing.

The filtering system further includes a filter screen cleaning apparatus. The filter screen cleaning apparatus is disposed in a strainer. The strainer includes a filter screen. The filter screen cleaning apparatus is configured to clean the filter screen of the strainer. Specifically, the filter screen cleaning apparatus includes a drive component and a brush connected to the drive component. The brush is in contact with the filter screen of the strainer. The drive component drives the brush to move on a surface of the filter screen, so that the filter screen cleaning apparatus can brush the surface of the filter screen, and dirt on the surface of the filter screen is brushed off, to improve cleaning strength of cleaning the filter screen of the Y-shaped strainer. The strainer includes the first Y-shaped strainer and/or the second Y-shaped strainer. In other words, a filter screen cleaning apparatus may be disposed in the first Y-shaped strainer or the second Y-shaped strainer, or a filter screen cleaning apparatus is disposed in each of the first Y-shaped strainer and the second Y-shaped strainer. Similarly, the filter screen cleaning apparatus may be started when the Y-shaped strainer is backwashed, or the filter screen cleaning apparatus may be started after the cleaning criterion is not met through backwashing, or the filter screen cleaning apparatus may be started after the cleaning criterion is not met through backwashing and working of the ultrasonic generator.

When the filter screen cleaning apparatus is specifically disposed, the brush may be an annular brush or a strip brush. The annular brush is sleeved on a peripheral side of the filter screen, and the drive component drives the annular brush to move in an axial direction of the filter screen, so that the annular brush can clean the entire surface of the filter screen. The strip brush extends in an axial direction of the filter screen, and the drive component drives the strip brush to move in a circumferential direction of the filter screen, so that the annular brush can clean the entire surface of the filter screen. A specific structure and a specific shape of the brush are not limited in this application, and the structure of the brush and a drive stroke of the matching drive component may be designed based on a requirement.

When the filter screen cleaning apparatus is specifically disposed, the filter screen cleaning apparatus includes an electromagnet, an annular slider, an annular brush, a reset member, and a power supply component. The annular brush is fastened to the annular slider. The strainer includes a first end and a second end that are located at two ends in an axial direction of the filter screen. The electromagnet is disposed at the first end. The reset member is connected between the annular slider and the strainer. The annular slider is located at the second end, namely, an end away from the electromagnet, when the reset member is in an energy release state. The power supply component controls a current of the electromagnet. When enough currents are introduced into the electromagnet, the electromagnet is magnetic, and can attract the annular slider to move towards the first end, so that the reset member stores energy. When the electromagnet is powered off or has a weak current, the reset member in an energy storage state can drive the annular slider to move towards the second end. In this solution, the current input into the electromagnet is controlled, so that the annular brush can be driven to perform reciprocating movement, to brush the entire surface of the filter screen.

The electromagnet may specifically be an annular electromagnet, and has a shape consistent with a shape of the annular slider, to help provide a large drive force by using a small current.

The following may be completed by using a manual operation: switching between various working modes by the filtering system, starting and closing of the ultrasonic generator, and starting and closing of the filter screen cleaning apparatus. Specifically, an occasion may be determined based on work experience, or a related operation may be performed periodically.

In addition, the filtering system may further implement online automatic control by using a controller. Specifically, the filtering system further includes a controller, and each switch valve is an electrically driven switch valve, to help control opening and closing of each switch valve by using the controller. In other words, the first switch valve, the second switch valve, the third switch valve, the fourth switch valve, the fifth switch valve, and the sixth switch valve are all electrically driven switch valves, and the controller is connected to the first switch valve, the second switch valve, the third switch valve, the fourth switch valve, the fifth switch valve, the sixth switch valve, and the first differential pressure detection apparatus. The controller is configured to obtain first differential pressure information of the first differential pressure detection apparatus, to determine whether the currently working Y-shaped strainer is blocked and needs to be cleaned. Therefore, the controller is configured to: when the first differential pressure information is greater than a first specified differential pressure, control the second switch valve, the third switch valve, the fourth switch valve, and the fifth switch valve to be opened, and control the first switch valve and the sixth switch valve to be closed. In this case, the second Y-shaped strainer is started, and the first Y-shaped strainer is backwashed. This is equivalent to starting the second working mode. Herein, it is considered by default that the first working mode is started before the step, where the first Y-shaped strainer is in a filtering working state. When the first differential pressure information is greater than the first specified differential pressure, it is considered that the first Y-shaped strainer is blocked and needs to be cleaned. Therefore, the second working mode is started, to backwash the first Y-shaped strainer and clean the first Y-shaped strainer.

When an ultrasonic generator is disposed in the first Y-shaped strainer, the controller is further connected to the ultrasonic generator and the second differential pressure detection apparatus, and the controller is further configured to obtain second differential pressure information of the second differential pressure detection apparatus, to determine whether the first Y-shaped strainer meets a cleaning criterion. After backwashing the first Y-shaped strainer for first duration, the controller determines whether the second differential pressure information is less than or equal to a second specified differential pressure; and if the second differential pressure information is less than or equal to the second specified differential pressure, the controller considers that the first Y-shaped strainer meets the cleaning criterion, and controls the second switch valve and the third switch valve to be closed, to stop backwashing the first Y-shaped strainer; or if the second differential pressure information is not less than or equal to the second specified differential pressure, the controller considers that the first Y-shaped strainer does not meet the cleaning criterion, and starts the ultrasonic generator, to improve cleaning strength to help the first Y-shaped strainer meet the cleaning criterion.

When a filter screen cleaning apparatus is disposed in the first Y-shaped strainer, the controller is further connected to the filter screen cleaning apparatus, and the controller is further configured to: after starting the ultrasonic generator for second duration, determine whether the second differential pressure information is less than or equal to the second specified differential pressure; and if the second differential pressure information is less than or equal to the second specified differential pressure, consider that the first Y-shaped strainer meets the cleaning criterion, and control the second switch valve and the third switch valve to be closed, to stop backwashing the first Y-shaped strainer; or if the second differential pressure information is not less than or equal to the second specified differential pressure, consider that the first Y-shaped strainer does not meet the cleaning criterion, and start the filter screen cleaning apparatus, to improve cleaning strength to help the first Y-shaped strainer meet the cleaning criterion. In this solution, appropriate cleaning strength may be selected based on cleaning effect of the Y-shaped strainer, so that the Y-shaped strainer is intelligently cleaned in an energy-saving manner based on an actual case.

In addition, when a filter screen cleaning apparatus is disposed in the first Y-shaped strainer, the controller is further connected to the filter screen cleaning apparatus, and the controller is further configured to: obtain second differential pressure information of the second differential pressure detection apparatus; after backwashing the first Y-shaped strainer for first duration, determine whether the second differential pressure information is less than or equal to a second specified differential pressure; and if the second differential pressure information is less than or equal to the second specified differential pressure, control the second switch valve and the third switch valve to be closed, to stop backwashing the first Y-shaped strainer; or if the second differential pressure information is not less than or equal to the second specified differential pressure, start the filter screen cleaning apparatus. Similarly, in this solution, different cleaning solutions are also started based on an actual cleaning case.

After starting the filter screen cleaning apparatus, the controller is further configured to: after starting the filter screen cleaning apparatus for n^{th} third duration, determine whether the second differential pressure information is less than or equal to the second specified differential pressure; and if the second differential pressure information is less than or equal to the second specified differential pressure, control the second switch valve and the third switch valve to be closed, to stop backwashing the first Y-shaped strainer; or if the second differential pressure information is not less than or equal to the second specified differential pressure, after (n+1)^{th} third duration, determine whether the second differential pressure information is less than or equal to the second specified differential pressure, and if the second differential pressure information is less than or equal to the second specified differential pressure, control the second switch valve and the third switch valve to be closed, to stop backwashing the first Y-shaped strainer, where n is a positive integer starting from 1, and n is cycled until the following case exists: when n is less than a specified value, the second switch valve is controlled to be closed, and backwashing of the first Y-shaped strainer is stopped, or when n is equal to a specified value, the first Y-shaped strainer is removed for washing or is replaced. In this solution, it is considered that after the filter screen cleaning apparatus is started, cleaning strength of the filtering system reaches a highest level, and the filter screen cleaning apparatus may work for long time. After each third duration, determining is performed to determine whether the first Y-shaped strainer meets the cleaning criterion. If the first Y-shaped strainer can meet the cleaning criterion after a specified quantity of third duration, cleaning of the first Y-shaped strainer is stopped. If the first Y-shaped strainer still does not meet the cleaning criterion after a quantity of third duration, a cleaning procedure of the first press-mode strainer is also stopped, and manual participation is required to remove, for washing, or replace the first Y-shaped strainer, where the quantity is equal to the specified value.

It should be noted that, in this embodiment of this application, stopping backwashing the first Y-shaped strainer means stopping all current cleaning means, including controlling the switch valve and stopping backwashing liquid, and also including closing the ultrasonic generator and the filter screen cleaning apparatus.

The first Y-shaped strainer and the second Y-shaped strainer may be two Y-shaped strainers used in parallel. In other words, after the first Y-shaped strainer is blocked, the first Y-shaped strainer is cleaned, and the second Y-shaped strainer is in a filtering working state until the second Y-shaped strainer is blocked. In this case, the second Y-shaped strainer is cleaned, and the first Y-shaped strainer is in a filtering working state.

Alternatively, the first Y-shaped strainer may be used as a primary strainer, and the second Y-shaped strainer may be used as a secondary strainer. In other words, after stopping backwashing the first Y-shaped strainer, the controller is further configured to: control the first switch valve, the second switch valve, the fifth switch valve, and the sixth switch valve to be opened, and control the third switch valve and the fourth switch valve to be closed, to start the first Y-shaped strainer, and backwash the second Y-shaped strainer. In other words, after cleaning of the first Y-shaped strainer is completed, the first Y-shaped strainer is started again, and the second Y-shaped strainer is backwashed. In other words, except when the first Y-shaped strainer is cleaned after being blocked, the first Y-shaped strainer is in a filtering working state. In this solution, the ultrasonic generator and the filter screen cleaning apparatus may be disposed only in the first Y-shaped strainer, to help reduce costs of the filtering system.

In addition, in the foregoing embodiment, a seventh pipeline is further connected between the second pipeline and the fourth pipeline, and a seventh switch valve is disposed in the seventh pipeline. In this solution, a combination of specified switch valves are properly selected to be opened and closed. Therefore, no Y-shaped strainer may not be selected to participate in filtering working, for example, in a scenario in which liquid is clean and does not need to be filtered; or all Y-shaped strainers may be selected to participate in filtering working through serial connection, for example, in a scenario in which there is a large quantity of impurities in liquid or a high cleanliness requirement is imposed on liquid.

To help clean a filter screen of a strainer, the first Y-shaped strainer and the second Y-shaped strainer each include a filter screen. A surface of the filter screen has a nano mirror coating or a self-cleaning alloy coating, so that dirt is not prone to be fastened to the filter screen, and the dirt can fall off the filter screen.

According to a second aspect, this application further provides an air conditioning system, where the air conditioning system includes a water pump, a heat exchanger set, and the filtering system in any one of the foregoing technical solutions. The water pump is connected to the total liquid inlet, and is configured to pump liquid in the air conditioning system to the filtering system for filtering. The heat exchanger is connected to the total liquid outlet, and the filtered liquid may flow to the heat exchanger set to execute a heat transfer process. In this solution, in the filtering system of the air conditioning system, a blocking problem of a strainer can be dealt with without shutting down the system, so that it can be ensured that the air conditioning system is in a working state for long time to ensure temperature stability of a corresponding environment.

According to a third aspect, this application further provides a data center, where the data center includes a cabinet, an electronic device, and the foregoing air conditioning system. The electronic device is disposed in a cabinet, and the air conditioning system is configured to control a temperature of the data center. The electronic device in the data center has a high temperature requirement on a working environment, and generates a large amount of heat. Once the air conditioning system is shut down or partially shut down, a local heating point is very likely caused. Consequently, the electronic device in a corresponding area abnormally works or is even damaged. Therefore, the air conditioning system in the technical solution of this application does not need to be shut down due to cleaning of a strainer, so that it can be ensured that the temperature of the data center is maintained within a specified range, to implement continuous and reliable running.

According to a fourth aspect, this application further provides a cleaning method for a filtering system, where the cleaning method includes: obtaining first differential pressure information between a total liquid inlet and a total liquid outlet; and controlling a second Y-shaped strainer to be started, and backwashing a first Y-shaped strainer when first differential pressure information is greater than a first specified differential pressure. In this solution, whether the first Y-shaped strainer is blocked may be automatically detected without shutting down the system. If the first Y-shaped strainer is blocked, the first Y-shaped strainer may be automatically cleaned, and the second Y-shaped strainer is started without shutting down the system processing. In this solution, cleaning working may be intelligently implemented for the strainer in an energy-saving manner without shutting down the system.

After the controlling a second Y-shaped strainer to be started, and backwashing a first Y-shaped strainer, the cleaning method further includes: obtaining second differential pressure information between a second liquid flow port and a first drainage port of the first Y-shaped strainer; after first duration, determining whether the second differential pressure information is less than or equal to a second specified differential pressure; and if the second differential pressure information is less than or equal to the second specified differential pressure, stopping backwashing the first Y-shaped strainer; or if the second differential pressure information is not less than or equal to the second specified differential pressure, starting an ultrasonic generator mounted in the first Y-shaped strainer. In this solution, after the first Y-shaped strainer meets a cleaning criterion, cleaning of the first Y-shaped strainer may be stopped, to save energy. If the first Y-shaped strainer cannot meet the cleaning criterion through backwashing of the first Y-shaped strainer, the ultrasonic generator is started to improve cleaning effect.

After the starting an ultrasonic generator mounted in the first Y-shaped strainer, the method further includes: after second duration, determining whether the second differential pressure information is less than or equal to the second specified differential pressure; and if the second differential pressure information is less than or equal to the second specified differential pressure, stopping backwashing the first Y-shaped strainer; or if the second differential pressure information is not less than or equal to the second specified differential pressure, starting a filter screen cleaning apparatus mounted in the first Y-shaped strainer. In other words, if the first Y-shaped strainer may meet the cleaning criterion after the first Y-shaped strainer is cleaned for the second duration, cleaning of the first Y-shaped strainer is stopped, to save energy. If the criterion cannot be met, the filter screen cleaning apparatus is started, to improve cleaning strength, and help the first Y-shaped strainer meet the cleaning criterion. In this solution, appropriate cleaning strength may be selected based on cleaning effect of the Y-shaped strainer, so that the Y-shaped strainer is intelligently cleaned in an energy-saving manner based on an actual case. Specifically, the cleaning method for a filtering system in this solution includes at least three levels of strength: backwashing, backwashing in combination with the ultrasonic generator, and backwashing in combination with the ultrasonic generator and the filter screen cleaning apparatus, and the cleaning strength successively increases. Based on an actual cleaning status, the cleaning strength is intelligently increased, to help reduce costs.

After the controlling a second Y-shaped strainer to be started, and backwashing a first Y-shaped strainer, the method further includes: obtaining second differential pressure information between a second liquid flow port and a first drainage port of the first Y-shaped strainer; after first duration, determining whether the second differential pressure information is less than or equal to a second specified differential pressure; and if the second differential pressure information is less than or equal to the second specified differential pressure, stopping backwashing the first Y-shaped strainer; or if the second differential pressure information is not less than or equal to the second specified differential pressure, starting a filter screen cleaning apparatus mounted in the first Y-shaped strainer. In other words, the filter screen cleaning apparatus is not necessarily started after the ultrasonic generator is started, and a cleaning manner may be determined based on an actual case.

After the starting a filter screen cleaning apparatus mounted in the first Y-shaped strainer, the methods further include: after n^{th} third duration, determining whether the second differential pressure information is less than or equal to the second specified differential pressure; and if the second differential pressure information is less than or equal to the second specified differential pressure, stopping backwashing the first Y-shaped strainer; or if the second differential pressure information is not less than or equal to the second specified differential pressure, after (n+1)^{th} third duration, determining whether the second differential pressure information is less than or equal to the second specified differential pressure, and if the second differential pressure information is less than or equal to the second specified differential pressure, stopping backwashing the first Y-shaped strainer, where n is a positive integer starting from 1, and n is cycled until the following case exists: when n+1 is less than a first specified value, backwashing of the first Y-shaped strainer is stopped, or when n+1 is equal to a specified value, the first Y-shaped strainer is removed for washing or is replaced. In this solution, it is considered that after the filter screen cleaning apparatus is started, cleaning strength of the filtering system reaches a highest level, and the filter screen cleaning apparatus may work for long time. After each third duration, it is determined whether the second differential pressure information is less than or equal to the second specified differential pressure, to determine whether the first Y-shaped strainer meets the cleaning criterion. If the first Y-shaped strainer can meet the cleaning criterion after a specified quantity of third duration, cleaning of the first Y-shaped strainer is stopped. If the first Y-shaped strainer still does not meet the cleaning criterion after a quantity of third duration, a cleaning procedure of the first press-mode strainer is also stopped, and manual participation is required to remove, for washing, or replace the first Y-shaped strainer, where the quantity is equal to the specified value.

After the stopping backwashing the first Y-shaped strainer, the method specifically includes: starting the first Y-shaped strainer, and backwashing the second Y-shaped strainer. In this solution, it is considered that the first Y-shaped strainer is used as a primary strainer, and the second Y-shaped strainer is used as a secondary strainer. In other words, after backwashing of the first Y-shaped strainer is stopped, the first Y-shaped strainer is started again, and the second Y-shaped strainer is backwashed. In other words, except when the first Y-shaped strainer is cleaned after being blocked, the first Y-shaped strainer is in a filtering working state. In this solution, the ultrasonic generator and the filter screen cleaning apparatus may be disposed only in the first Y-shaped strainer, to help reduce costs of the filtering system.

Specifically, after the backwashing the second Y-shaped strainer, the method includes: obtaining third differential pressure information between a fourth liquid flow port and a second drainage port of the second Y-shaped strainer; after m^{th} fourth duration, determining whether the third differential pressure information is less than or equal to a third specified differential pressure; and if the third differential pressure information is less than or equal to the third specified differential pressure, stopping backwashing the second Y-shaped strainer; or if the third differential pressure information is not less than or equal to the third specified differential pressure, after (m+1)^{th} fourth duration, determining whether the third differential pressure information is less than or equal to the third specified differential pressure, and if the third differential pressure information is less than or equal to the third specified differential pressure, stopping backwashing the second Y-shaped strainer, where m is a positive integer starting from 1, and m is cycled until the following case exists: when m is less than a second specified value, backwashing of the second Y-shaped strainer is stopped, or when m is equal to a specified value, the second Y-shaped strainer is removed for washing or is replaced. A principle of the second Y-shaped strainer is similar to that of the first Y-shaped strainer, and details are not described herein again.

### BRIEF DESCRIPTION OF DRAWINGS

FIG. 1 is a schematic diagram of a structure of a data center according to an embodiment of this application;
FIG. 2 is a schematic diagram of a structure of an air conditioning system according to an embodiment of this application;
FIG. 3 is a schematic diagram of a structure of a filtering system according to an embodiment of this application;
FIG. 4 is a schematic diagram of a first working mode of a filtering system according to an embodiment of this application;
FIG. 5 is a schematic diagram of a second working mode of a filtering system according to an embodiment of this application;
FIG. 6 is a schematic diagram of a third working mode of a filtering system according to an embodiment of this application;
FIG. 7 is a schematic diagram of another structure of a filtering system according to an embodiment of this application;
FIG. 8 is a schematic diagram of another structure of a filtering system according to an embodiment of this application;
FIG. 9 is a schematic diagram of a structure of a Y-shaped strainer according to an embodiment of this application;
FIG. 10 is a top-view schematic diagram of a structure of a Y-shaped strainer according to an embodiment of this application;
FIG. 11 is a schematic diagram of a structure of a Y-shaped strainer according to an embodiment of this application;
FIG. 12 is a schematic diagram of another structure of a filtering system according to an embodiment of this application;
FIG. 13 is a schematic diagram of a fourth working mode of a filtering system according to an embodiment of this application;
FIG. 14 is a schematic diagram of a fifth working mode of a filtering system according to an embodiment of this application;
FIG. 15 is a flowchart of a cleaning method for a filtering system according to an embodiment of this application;
FIG. 16 is another flowchart of a cleaning method for a filtering system according to an embodiment of this application;
FIG. 17 is another flowchart of a cleaning method for a filtering system according to an embodiment of this application;
FIG. 18 is another flowchart of a cleaning method for a filtering system according to an embodiment of this application;
FIG. 19A and FIG. 19B are another flowchart of a cleaning method for a filtering system according to an embodiment of this application; and
FIG. 20A, FIG. 20B, and FIG. 20C are another flowchart of a cleaning method for a filtering system according to an embodiment of this application.

Description of reference numerals:
100-data center; 200-cabinet; 300-electronic device; 400-air conditioning system; 500-water pump; 600-heat exchanger set; 700-filtering system; 1-total liquid inlet; 2-total liquid outlet; 3-first Y-shaped strainer; 31-first liquid flow port; 32-second liquid flow port; 33-first drainage port; 4-second Y-shaped strainer; 41-third liquid flow port; 42-fourth liquid flow port; 43-second drainage port; Gl-first pipeline; G2-second pipeline; G3-third pipeline; G4-fourth pipeline; G5-fifth pipeline; G6-sixth pipeline; G7-seventh pipeline; Vl-first switch valve; V2-second switch valve; V3-third switch valve; V4-fourth switch valve; VS-fifth switch valve; V6-sixth switch valve; S1-first differential pressure detection apparatus; S2-second differential pressure detection apparatus; S3-third differential pressure detection apparatus; 5-ultrasonic generator; 6-filter screen cleaning apparatus; 61-drive component; 611-electromagnet; 612-annular slider; 613-reset member; 614-mounting flange; 615-spring mandrel; 62-brush; 621-annular brush; 622-strip brush; 63-guide rail; 64-groove; 7-strainer; and 71-filter screen.

### DESCRIPTION OF EMBODIMENTS

To facilitate understanding of a filtering system, an air conditioning system, a data center, and a cleaning method for a filtering system that are provided in embodiments of this application, the following first describes an application scenario thereof.

In various liquid systems such as water systems, liquid needs to be filtered in many systems. In this case, a filtering system is generally disposed in the liquid system. After a strainer in the filtering system is used for a period, the strainer is prone to be dirty and blocked, and the strainer needs to be cleaned. For example, as technologies develop, increasingly more data centers are used. A temperature of the data center generally needs to be maintained within a specified range, to ensure normal running of a device in the data center. Therefore, an air conditioning system is generally disposed to control the temperature of the data center. A commonly used air conditioning system may use the water system to adjust the temperature, and water in the water system needs to be kept clean. Therefore, a filtering system is disposed at an entrance of the water system. In this system, a cleaning manner of the strainer is essential to normal running of the data center. In a conventional technology, the strainer is cleaned through manual removal for washing, and a pipeline in which the strainer is located needs to be stopped. This is time-consuming and laborious, and a conventional problem such as water leakage may be caused. In addition, a local heating point may also occur in the data center because the air conditioning system is shut down. Consequently, a device and a component of the data center may be damaged. Therefore, this application provides a filtering system, an air conditioning system, a data center, and a cleaning method for a filtering system, to clean a strainer without shutting down the system.

To make the objectives, technical solutions, and advantages of this application clearer, the following further describes this application in detail with reference to the accompanying drawings and specific embodiments.

Terms used in the following embodiments are merely intended to describe specific embodiments, but are not intended to limit this application. Terms "one", "a", "the", "the foregoing", "this", and "the one" of singular forms used in this specification and the appended claims of this application are also intended to include plural forms like "one or more", unless otherwise specified in the context clearly. It should be further understood that, in the following embodiments of this application, "at least one" or "one or more" means one, two, or more. The term "and/or" is used to describe an association between associated objects and represents that three relationships may exist. For example, A and/or B may represent the following three cases: Only A exists, both A and B exist, and only B exists, where A and B may be singular or plural. The character "/" generally indicates an "or" relationship between the associated objects.

Reference to "an embodiment", "some embodiments", or the like described in this specification indicates that one or more embodiments of this application include a specific feature, structure, or characteristic described with reference to the embodiments. Therefore, statements such as "in an embodiment", "in some embodiments", "in some other embodiments", and "in other embodiments", that appear at different places in this specification do not necessarily mean referring to a same embodiment, instead, they mean "one or more but not all of the embodiments", unless otherwise specifically emphasized. The terms "include", "contain", "have", and their variants all mean "include but are not limited to", unless otherwise specifically emphasized.

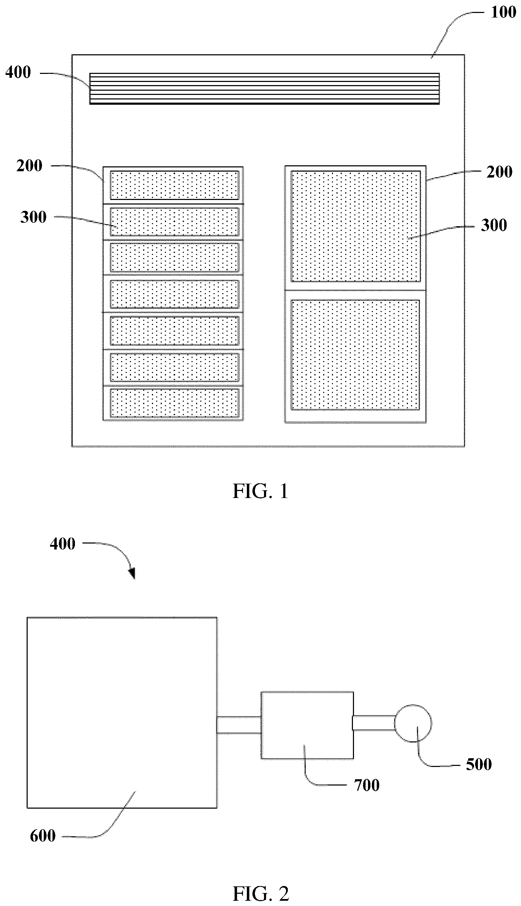

FIG. 1 is a schematic diagram of a structure of a data center according to an embodiment of this application. As shown in FIG. 1, in an embodiment, a data center 100 includes a cabinet 200 and an electronic device 300 disposed in the cabinet 200. A specific type of the electronic device 300 is not limited, for example, the electronic device 300 may be a computing device (such as a server), a network device (such as a LAN switch), a storage device (such as a storage array), and an energy device (such as a battery and a power supply). To ensure that the electronic device 300 of the data center 100 maintains a good running state, the data center 100 further includes an air conditioning system 400, to control a temperature of the data center 100, so that the temperature of the data center 100 is maintained within a range in which the electronic device 300 runs well.

FIG. 2 is a schematic diagram of a structure of an air conditioning system according to an embodiment of this application. As shown in FIG. 2, in an embodiment, the air conditioning system 400 includes a water pump 500, a heat exchanger set 600, and a filtering system 700. The filter set includes a total liquid inlet 1 and a total liquid outlet 2, and the water pump 500 is connected to the total liquid inlet 1 of the filtering system 700, and is configured to pump liquid to the filtering system 700 for filtering. The heat exchanger set 600 is connected to the total liquid outlet 2 of the filtering system 700, so that the liquid filtered by the filtering system 700 enters the heat exchanger set 600 for heat exchange. In addition to the data center 100, the air conditioning system 400 may also be applied to any scenario in which the air conditioning system 400 needs to be disposed, for example, a scenario in which the air conditioning system 400 needs to be disposed, for example, an office or a hotel.

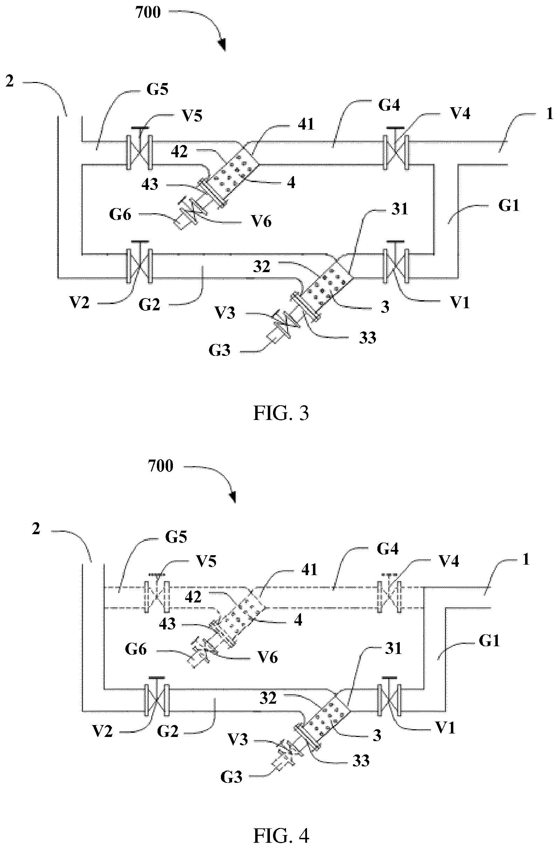

FIG. 3 is a schematic diagram of a structure of a filtering system according to an embodiment of this application. As shown in FIG. 3, the filtering system 700 includes the total liquid inlet 1, the total liquid outlet 2, and two branches connected between the total liquid inlet 1 and the total liquid outlet 2. One Y-shaped strainer is disposed in each branch, and the Y-shaped strainers are respectively a first Y-shaped strainer 3 and a second Y-shaped strainer 4. As shown in FIG. 3, the first Y-shaped strainer 3 includes a first liquid flow port 31, a second liquid flow port 32, and a first drainage port 33, a first pipeline G1 is connected between the first liquid flow port 31 and the total liquid inlet 1, a second pipeline G2 is connected between the second liquid flow port 32 and the total liquid outlet 2, and a third pipeline G3 is connected between the first drainage port 33 and a first waste liquid area. The second Y-shaped strainer 4 includes a third liquid flow port 41, a fourth liquid flow port 42, and a second drainage port 43, the third liquid flow port 41 is connected to the total liquid inlet 1 by using a fourth pipeline G4, the fourth liquid flow port 42 is connected to the total liquid outlet 2 by using a fifth pipeline G5, and the second drainage port 43 is connected to a second waste liquid area by using a sixth pipeline G6. A switch valve is disposed in each of the foregoing pipelines. Opening and closing of each switch valve are controlled, so that a flow path of liquid can be controlled. Specifically, a first switch valve V1 is disposed in the first pipeline G1, a second switch valve V2 is disposed in the second pipeline G2, a third switch valve V3 is disposed in the third pipeline G3, a fourth switch valve V4 is disposed in the fourth pipeline G4, a fifth switch valve V5 is disposed in the fifth pipeline G5, and a sixth switch valve V6 is disposed in the sixth pipeline G6.

The filtering system 700 in this embodiment may have a plurality of working modes, and may be switched between various working modes by opening and closing the switch valves. FIG. 4 is a schematic diagram of a first working mode of a filtering system according to an embodiment of this application. In the embodiment shown in FIG. 4, in the first working mode, the first switch valve V1 and the second switch valve V2 are opened, and the third switch valve V3, the fourth switch valve V4, the fifth switch valve V5, and the sixth switch valve V6 are closed. After entering the filtering system 700 from the total liquid inlet 1, the liquid successively passes through the first pipeline G1, the first Y-shaped strainer 3, and the second pipeline G2, and flows out of the filtering system 700 from the total liquid outlet 2. In other words, only the first Y-shaped strainer 3 of the filtering system 700 participates in filtering of the liquid. Certainly, a working mode in which only the second Y-shaped strainer 4 of the filtering system 700 participates in filtering of the liquid when the fourth switch valve V4 and the fifth switch valve V5 are opened, and the first switch valve V1, the second switch valve V2, the third switch valve V3, and the sixth switch valve V6 are closed also belongs to the first working mode. In other words, when no special description is provided, in any embodiment of this application, the first Y-shaped strainer 3 and the second Y-shaped strainer 4 are not distinguished from each other, and may be replaced with each other. For ease of description, in this embodiment of this application, the first Y-shaped strainer 3 and a matching switch valve are mainly used as an example for description. It may be understood that, the first Y-shaped strainer 3 may be understood as either of the two Y-shaped strainers, and the second Y-shaped strainer 4 may be understood as the other of the two Y-shaped strainers.

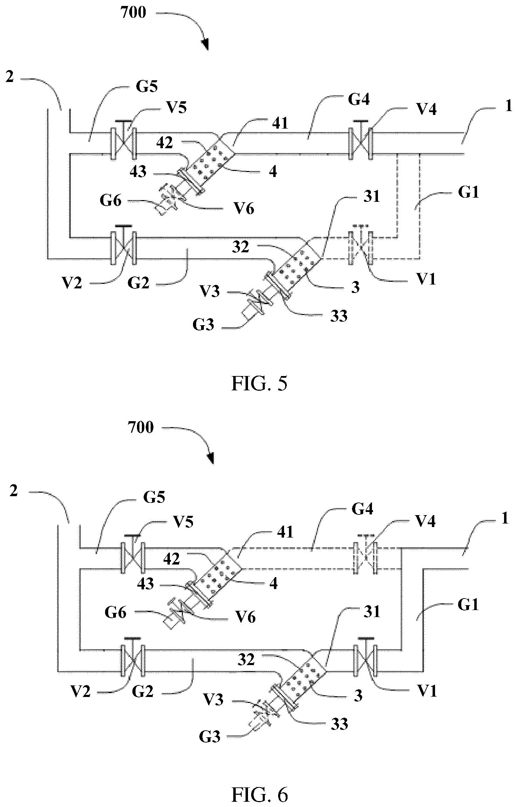

FIG. 5 is a schematic diagram of a second working mode of a filtering system according to an embodiment of this application. In the embodiment shown in FIG. 5, in the second working mode, the second switch valve V2, the third switch valve V3, the fourth switch valve V4, and the fifth switch valve V5 are opened, and the first switch valve V1 and the sixth switch valve V6 are closed. After entering the filtering system 700 from the total liquid inlet 1, the liquid successively passes through the fourth pipeline G4, the second Y-shaped strainer 4, and the fifth pipeline G5. After filtering is completed, the liquid is divided into two channels: a first channel and a second channel. The first channel of liquid flows out of the filtering system 700 from the total liquid outlet 2. The second channel of liquid successively passes through the second pipeline G2, the first Y-shaped strainer 3, and the third pipeline G3, and flows to the first waste liquid area. The second channel of liquid flows into the first Y-shaped strainer 3 from the second liquid flow port 32 of the first Y-shaped strainer 3, and is discharged from the first drainage port 33. A flow direction of the second channel of liquid in the first Y-shaped strainer 3 is opposite to a flow direction of liquid in the first Y-shaped strainer 3 in a filtering process. Therefore, the second channel of liquid may backwash dirt remaining on a filter screen of the first Y-shaped strainer 3, and is discharged from the first drainage port 33 to the first waste liquid area, to clean the first Y-shaped strainer 3.

FIG. 6 is a schematic diagram of a third working mode of a filtering system according to an embodiment of this application. In the embodiment shown in FIG. 6, in the third working mode, the first switch valve V1, the second switch valve V2, the fifth switch valve V5, and the sixth switch valve V6 are opened, and the third switch valve V3, and the fourth switch valve V4 are closed. After entering the filtering system 700 from the total liquid inlet 1, the liquid successively passes through the first pipeline G1, the first Y-shaped strainer 3, and the second pipeline G2. After filtering is completed, the liquid is divided into two channels: a third channel and a fourth channel. The third channel of liquid flows out of the filtering system 700 from the total liquid outlet 2. The fourth channel of liquid successively passes through the fifth pipeline G5, the second Y-shaped strainer 4, and the sixth pipeline G6, and flows to the second waste liquid area. The fourth channel of liquid flows into the second Y-shaped strainer 4 from the fourth liquid flow port 42 of the second Y-shaped strainer 4, and is discharged from the second drainage port 43. A flow direction of the fourth channel of liquid in the second Y-shaped strainer 4 is opposite to a flow direction of liquid in the second Y-shaped strainer 4 in a filtering process. Therefore, the fourth channel of liquid may backwash dirt remaining on a filter screen of the second Y-shaped strainer 4, and is discharged from the second drainage port 43 to the second waste liquid area, to clean the second Y-shaped strainer 4.

It should be noted that, in this embodiment of this application, a type of liquid that may be filtered by the filtering system 700 is not limited, and the liquid may be any liquid that needs to be filtered, for example, water, oil, chemical solution, or any liquid that needs to be filtered.

When the filtering system 700 in this embodiment of this application is specifically used, the filtering system 700 may be first in the first working mode. When the first Y-shaped strainer 3 is dirty or blocked, or after a specified period, the second working mode may be started, so that the second Y-shaped strainer 4 starts to work, to clean the first Y-shaped strainer 3. Then, when the second Y-shaped strainer 4 is dirty or blocked, or after cleaning of the first Y-shaped strainer 3 is completed, or after a specified period, the third working mode is started, so that the first Y-shaped strainer 3 starts to work, to clean the second Y-shaped strainer 4. After cleaning of the second Y-shaped strainer 4 is completed, the first working mode may be started again. In conclusion, in the technical solution of this application, based on a requirement, one of the Y-shaped strainers may be selected to work, and the other Y-shaped strainer may be backwashed at the same time. The two Y-shaped strainers may alternately work, and the Y-shaped strainer may be cleaned without removing the strainer for washing. Therefore, in this solution, the strainer may be cleaned in a time-saving and labor-saving manner, and it can be ensured that the strainer is cleaned without stopping the filtering system 700 and shutting down the air conditioning system 400, so that the temperature of the data center 100 is maintained within a specified temperature range, and the electronic device 300 is not easily damaged and maintains a good running state. In addition, there is no need to disassemble the strainer frequently, so that sealing of the filtering system 700 can be maintained, and water leakage does not easily occur.

In a specific embodiment, the first Y-shaped strainer and the second Y-shaped strainer each include a filter screen, and a surface of the filter screen has a nano mirror coating or a self-cleaning alloy coating. In this solution, a coating is produced on the surface of the filter screen, and the filter screen has a smooth surface, a rounded corner, and high surface flatness. In this case, a capability that the dirt combines with the surface of the filter screen is reduced, to help the dirt fall off the surface of the filter screen, and facilitate cleaning of the strainer.

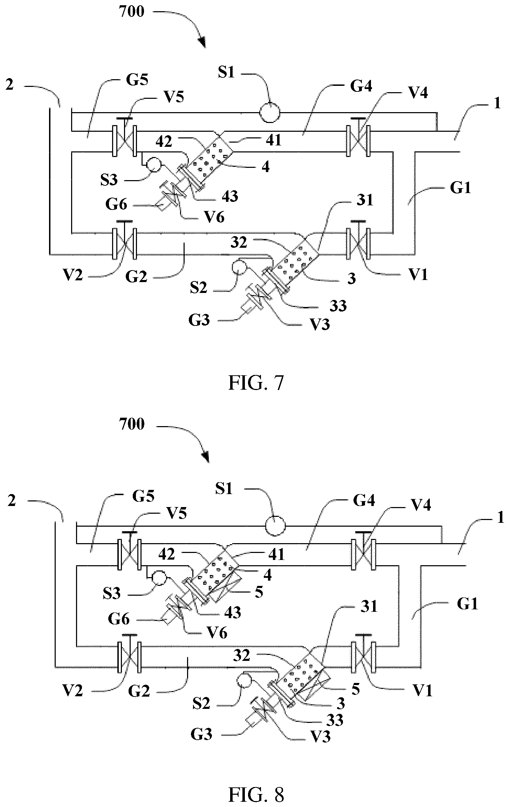

FIG. 7 is a schematic diagram of another structure of a filtering system according to an embodiment of this application. Refer to FIG. 7. The filtering system 700 in this embodiment of this application further includes a first differential pressure detection apparatus S1, a second differential pressure detection apparatus S2, and a third differential pressure detection apparatus S3. The first differential pressure detection apparatus S1 is connected between the total liquid inlet 1 and the total liquid outlet 2, and is configured to detect a current differential pressure between the total liquid inlet 1 and the total liquid outlet 2, to monitor a differential pressure of a currently working Y-shaped strainer. The second differential pressure detection apparatus S2 is connected between the second pipeline G2 and the third pipeline G3, and is configured to detect a differential pressure between the first drainage port 33 and the second liquid flow port 32, to monitor an effect of backwashing the first Y-shaped strainer 3. The third differential pressure detection apparatus S3 is connected between the fifth pipeline G5 and the sixth pipeline G6, and is configured to detect a differential pressure between the second drainage port 43 and the fourth liquid flow port 42, to monitor an effect of backwashing the second Y-shaped strainer 4. In this solution, a blocking case of each part of the filtering system 700 may be determined by using each differential pressure detection apparatus, to determine whether to perform cleaning or stop cleaning. The filtering system 700 may be prevented from abnormally working because blocking is not found when the strainer is seriously blocked, or waste caused because cleaning is still performed when cleaning of the strainer has been completed may be avoided.

The first differential pressure detection apparatus S1, the second differential pressure detection apparatus S2, and the third differential pressure detection apparatus S3 each may be a differential pressure sensor or a differential pressure switch. The differential pressure sensor may obtain and display a differential pressure value in real time, and a user may determine a current differential pressure state based on a specific differential pressure value. For example, the user directly reads the differential pressure value to perform determining, and directly uses the differential pressure value as differential pressure information; or a controller reads the differential pressure value, and compares the differential pressure value with a specified value. When the differential pressure value has a specified relationship with the specified value, an alarm signal is sent as differential pressure information. The differential pressure switch may set a specified value, and does not display a differential pressure in real time. Only when a current differential pressure and a specified value meet a specified requirement, an alarm signal is sent as differential pressure information.

FIG. 8 is a schematic diagram of another structure of a filtering system according to an embodiment of this application. Refer to FIG. 8. The filtering system 700 in this embodiment of this application further includes an ultrasonic generator 5. The ultrasonic generator 5 may be mounted in the first Y-shaped strainer 3 or the second Y-shaped strainer 4, or the ultrasonic generator 5 is disposed in each of the first Y-shaped strainer 3 and the second Y-shaped strainer 4. When the ultrasonic generator 5 is started, dirt adhered to the filter screen may be loosened and fall off, to facilitate cleaning. When it is difficult to clean the first Y-shaped strainer 3 through backwashing, the ultrasonic generator 5 mounted in the first Y-shaped strainer 3 may be started, so that the dirt on the filter screen of the first Y-shaped strainer 3 can be vibrated to a loosened state by using an ultrasonic wave, to help remove the dirt through backwashing. Alternatively, the ultrasonic generator 5 is started when the first Y-shaped strainer 3 is backwashed, to improve backwashing efficiency. Certainly, the second Y-shaped strainer 4 may also be cleaned by using the foregoing method, and details are not described herein again.

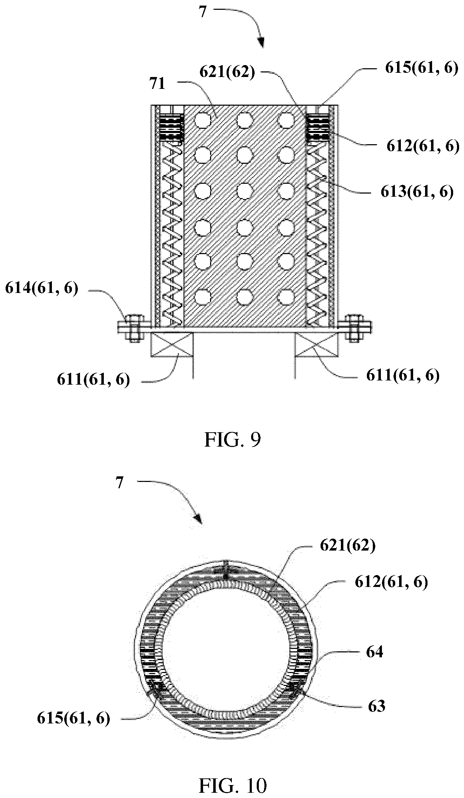

FIG. 9 is a schematic diagram of a structure of a Y-shaped strainer according to an embodiment of this application. As shown in FIG. 9, the filtering system 700 in this embodiment of this application may further include a filter screen cleaning apparatus 6. The filter screen cleaning apparatus 6 is disposed in the first Y-shaped strainer 3 or the second Y-shaped strainer 4, or the filter screen cleaning apparatus 6 is disposed in each of the first Y-shaped strainer 3 and the second Y-shaped strainer 4. Specifically, the filter screen cleaning apparatus 6 includes a drive component 61 and a brush 62 connected to the drive component 61 in a driven manner. The brush 62 is in contact with a filter screen 71 of a strainer 7. Therefore, the surface of the filter screen 71 can be brushed and cleaned by driving, by the drive component 61, the brush 62 to move on a surface of the filter screen 71 and by using backwashing liquid. In this solution, the filter screen cleaning apparatus 6 has high cleaning strength, so that stubborn dirt can also be loosened by using the brush 62, and the dirt can be removed through backwashing. In this solution, the filter screen cleaning apparatus 6 may be started when it is difficult to clean the strainer 7 through backwashing, or may be started when it is still difficult to clean the strainer 7 after backwashing and the ultrasonic generator 5 are used, or may be started when cleaning of the filter screen 71 is started, to improve cleaning efficiency. The strainer 7 may be the first Y-shaped strainer 3, or may be the second Y-shaped strainer 4.

When the filter screen cleaning apparatus 6 is specifically disposed, a shape and a drive manner of the brush 62 of the filter screen cleaning apparatus 6 are not limited. For example, FIG. 10 is a top-view schematic diagram of a structure of a Y-shaped strainer according to an embodiment of this application. As shown in FIG. 9 and FIG. 10, in an embodiment, the brush 62 may be an annular brush 621, the annular brush 621 is sleeved on a peripheral side of the filter screen 71, and the drive component 61 drives the annular brush 621 to move in an axial direction of the filter screen 71. The annular brush 621 can brush the entire surface of the filter screen 71 once by moving in the axial direction of the filter screen 71 for a complete stroke.

In a specific embodiment, the filter screen cleaning apparatus 6 may include an electromagnet 611, an annular slider 612, an annular brush 621, a reset member 613, a power supply component, and a mounting flange 614. The electromagnet 611, the annular slider 612, the power supply component, and the mounting flange 614 may be considered as the drive component 61, and are configured to drive the annular brush 621 to move in an axial direction of the filter screen 71. The annular brush 621 is fastened to the annular slider 612, the reset member 613 is connected between the annular slider 612 and the mounting flange 614, and the electromagnet 611 is located at an end of the annular slider 612 that faces away from the mounting flange 614. Specifically, it may be considered that two ends of the strainer 7 in the axial direction of the filter screen 71 are respectively a first end and a second end. The electromagnet 611 is fastened to the first end, and the mounting flange 614 is fastened to the second end. The electromagnet 611 is connected to the power supply component, and the power supply component controls a current in the electromagnet 611. When the electromagnet 611 is not energized, the annular slider 612 is at a position close to the second end, and the reset member 613 is in an energy release state. When the power supply component enables the electromagnet 611 to be energized, the electromagnet 611 may attract the annular slider 612, so that the annular slider 612 drives the annular brush 621 to move from the second end to the first end. In this case, the reset member 613 is in an energy storage state, to complete one time of brushing for the filter screen 71. After the power supply component enables the electromagnet 611 to be de-energized, the reset member 613 releases energy to drive the annular slider 612 to move from the first end to the second end, so as to complete another time of brushing for the filter screen 71. In this case, the annular brush 621 completes one period of movement. On/off of the current in the electromagnet 611 is continuously controlled by using the power supply component, so that the annular brush 621 can perform a plurality of times of periodic reciprocating movement to wash the filter screen 71.

In a specific embodiment, the foregoing electromagnet 611 may be an annular electromagnet, so that there is a strong attraction force between the annular electromagnet and the annular slider 612. In addition, the mounting flange 614 may be mounted on a flange of the strainer 7, or may be integrated with a flange of the strainer 7, or may be any fastening structure of the strainer 7 at the second end. This is not limited in this application. The power supply component may specifically be a timing relay, so that a periodic current can be input to the electromagnet 611.

To improve reliability of periodic reciprocating movement of the annular slider 612, a guide rail 63 and a groove 64 may be disposed between the annular slider 612 and the strainer 7. The guide rail 63 extends in the axial direction of the filter screen 71 to perform guiding. Specifically, as shown in FIG. 9 and FIG. 10, in an embodiment, the guide rail 63 is disposed in the strainer 7, the groove is located in the annular slider 612, and the groove 64 matches the guide rail 63, so that the annular slider 612 can stably move in the axial direction of the filter screen 71.

Still refer to FIG. 9 and FIG. 10. The reset member 613 may be specifically a spring. To ensure working reliability of the spring, a spring mandrel 615 may be disposed, and the spring is sleeved outside the spring mandrel, to ensure stability of the spring in a deformation process. In addition, the annular slider 612 may be disposed in a through hole or an opening that matches the foregoing spring mandrel 615. In this case, the spring mandrel 615 may also play a guiding role for the annular slider 612.

The foregoing annular slider 612 may be of an iron galvanized material. The iron annular slider 612 is conducive to reducing costs. In addition, galvanization can protect the annular slider 612 from rust and corrosion.

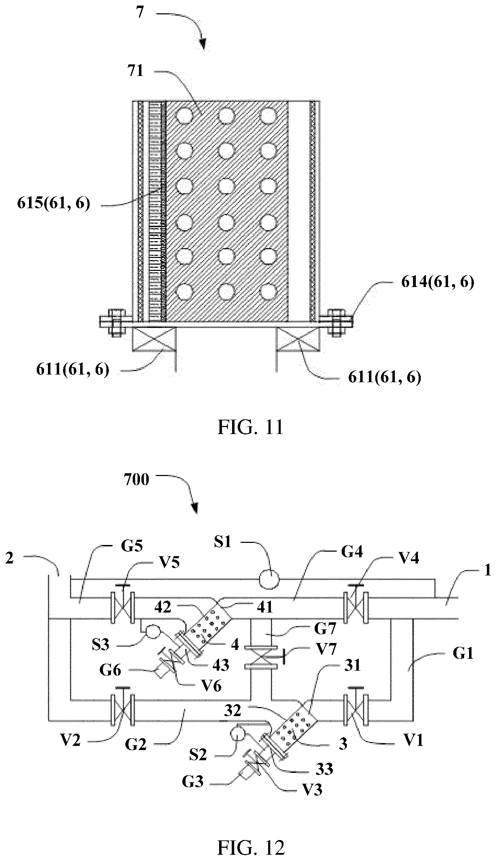

FIG. 11 is a schematic diagram of a structure of a Y-shaped strainer according to an embodiment of this application. As shown in FIG. 11, in another embodiment, the brush 62 may be a strip brush 622. The strip brush 622 extends in an axial direction of the filter screen 71, and the drive component 61 drives the strip brush 622 to move in a circumferential direction of the filter screen 71. In this solution, the drive component 61 may be a motor to drive the strip brush 622 to move in the circumferential direction. In this solution, one circle of the surface of the filter screen 71 can also be cleaned after the strip brush 622 performs one period of movement.

In the filtering system 700 in this embodiment of this application, the Y-shaped strainer of the filtering system may be cleaned without shutting down the system. A specific cleaning process may be manually controlled. For example, the filtering system 700 is periodically and successively cycled in the first working mode, the second working mode, and the third working mode, and the ultrasonic generator 5 and the filter screen cleaning apparatus 6 are started based on a requirement. Alternatively, the filtering system 700 is manually switched between the first working mode, the second working mode, and the third working mode based on the differential pressure information of the first differential pressure detection apparatus S 1, the second differential pressure detection apparatus S2, and the third differential pressure detection apparatus S3, and the ultrasonic generator 5 and the filter screen cleaning apparatus 6 are started based on a requirement.

In addition, a controller may be further used to implement automatic, intelligent, and energy-saving cleaning for the filtering system 700. The following describes, by using an example, how to implement an automatic cleaning process of the filtering system 700 without shutting down the system by using the controller, to reduce consumption of personnel and avoid a problem such as untimely cleaning or resource waste caused by a human factor.

The filtering system 700 in this embodiment of this application further includes a controller, and the foregoing switch valves are electrically driven switch valves, to help the controller to control opening and closing of the switch valves. Specifically, the first switch valve V1, the second switch valve V2, the third switch valve V3, the fourth switch valve V4, the fifth switch valve V5, and the sixth switch valve V6 are all electrically driven switch valves such as an electric valve or an electromagnetic valve. The controller is connected to the first switch valve V1, the second switch valve V2, the third switch valve V3, the fourth switch valve V4, the fifth switch valve V5, the sixth switch valve V6, and the first differential pressure detection apparatus. Herein, it is considered by default that the filtering system 700 starts to work in the first working mode when the filtering system 700 is initially started, as shown in FIG. 4. The controller is configured to: obtain first differential pressure information of the first differential pressure detection apparatus S1; and when the first differential pressure information is greater than a first specified differential pressure, consider that the first Y-shaped strainer 3 is blocked and needs to be cleaned. In this case, the filtering system 700 needs to start the second working mode, as shown in FIG. 5. In this case, the controller controls the second switch valve V2, the third switch valve V3, the fourth switch valve V4, and the fifth switch valve V5 to be opened, and controls the first switch valve V1 and the sixth switch valve V6 to be closed, to start the second Y-shaped strainer 4, and backwash the first Y-shaped strainer 3. Normal filtering working of the filtering system 700 is ensured, so that a pipeline having the filtering system 700 can run normally. For example, the air conditioning system 400 may continue to maintain a running state, to ensure that the temperature of the data center 100 is within a specified range. In addition, the blocked strainer may be further cleaned. The cleaning process of the filtering system 700 does not require shutdown, disassembly, or human participation. Therefore, automatic cleaning of the filtering system 700 without shutting down the system is implemented.

To improve cleaning effect of the strainer, when an ultrasonic generator 5 is disposed in the first Y-shaped strainer 3, the controller is connected to the ultrasonic generator 5 and the second differential pressure detection apparatus S2. The controller is further configured to: obtain second differential pressure information of the second differential pressure detection apparatus S2, in other words, obtain a differential pressure between the first drainage port 33 and the second liquid flow port 32, and determine an effect of backwashing the first Y-shaped strainer 3. The controller is configured to: after backwashing the first Y-shaped strainer 3 for first duration, in other words, after the filtering system 700 works in the second working mode for the first duration, determine whether the second differential pressure information is less than or equal to a second specified differential pressure, in other words, whether the cleaning effect of the first Y-shaped strainer 3 meets a standard; and if the second differential pressure information is less than or equal to the second specified differential pressure, control the second switch valve V2 and the third switch valve V3 to be closed, to stop backwashing the first Y-shaped strainer 3, and close the ultrasonic generator 5, where in this case, only the second Y-shaped strainer 4 performs filtering working, and this is equivalent to the first working mode of the filtering system 700; or if the second differential pressure information is not less than or equal to the second specified differential pressure, start the ultrasonic generator 5, where the ultrasonic generator 5 is used when the first Y-shaped strainer 3 is backwashed, to increase cleaning strength of the filtering system 700, so as to enable the cleaning effect of the first Y-shaped strainer 3 to meet the standard. In this solution, in an unnecessary case, the ultrasonic generator 5 may not be started, to save energy, reduce working duration of the ultrasonic generator 5, and improve a service life of the ultrasonic generator 5.

It should be noted that the first Y-shaped strainer 3 is used as an example herein. Actually, the foregoing embodiment is also applicable to a case in which the second Y-shaped strainer 4 needs to be cleaned and an ultrasonic generator 5 is disposed in the second Y-shaped strainer 4. When the second working mode is started, the controller may further control the ultrasonic generator 5 to be started, to improve a cleaning speed and efficiency of the first Y-shaped strainer 3.

To improve the cleaning effect of the strainer, when a filter screen cleaning apparatus 6 is disposed in the first Y-shaped strainer 3, the controller is further connected to the filter screen cleaning apparatus 6. The controller is further configured to: after starting the ultrasonic generator 5 for second duration, determine whether the second differential pressure information is less than or equal to the second specified differential pressure, in other words, whether the cleaning effect of the first Y-shaped strainer 3 meets the standard; and if the second differential pressure information is less than or equal to the second specified differential pressure, control the second switch valve V2 and the third switch valve V3 to be closed, to stop backwashing the first Y-shaped strainer 3, and close the ultrasonic generator 5 and the filter screen cleaning apparatus 6, where in this case, only the second Y-shaped strainer 4 performs filtering working, and this is equivalent to the first working mode of the filtering system 700; or if the second differential pressure information is not less than or equal to the second specified differential pressure, start the filter screen cleaning apparatus 6, where in this case, the ultrasonic generator 5 and the filter screen cleaning apparatus 6 are used when the first Y-shaped strainer 3 is backwashed, to increase the cleaning strength of the filtering system 700, so as to enable the cleaning effect of the first Y-shaped strainer 3 to meet the standard. In this solution, in an unnecessary case, the filter screen cleaning apparatus 6 may not be started, to save energy, reduce working duration of the filter screen cleaning apparatus 6, and improve a service life of the filter screen cleaning apparatus 6.

In this embodiment, the cleaning process of the filtering system 700 includes three levels of strength. It may be considered that a first level of strength is backwashing of the strainer, a second level of strength is backwashing of the strainer in combination with the ultrasonic generator 5, and a third level of strength is backwashing in combination with the ultrasonic generator 5 and the filter screen cleaning apparatus 6. In this embodiment, a cleaning mode may be intelligently selected based on a cleaning case of the strainer. Specifically, the cleaning mode may be increased step by step, so that energy can be saved, and the cleaning effect can also be ensured.

It should be noted that only the first Y-shaped strainer 3 is still used as an example herein, and details are not described herein again. Similarly, when the second working mode is started, the filter screen cleaning apparatus 6 may be started; or when the second working mode is started, both the ultrasonic strainer and the filter screen cleaning apparatus 6 may be started.

In addition, when a filter screen cleaning apparatus 6 is disposed in the first Y-shaped strainer 3, the controller may be further configured to: obtain second differential pressure information of the second differential pressure detection apparatus S2; after backwashing the first Y-shaped strainer 3 for first duration, determine whether the second differential pressure information is less than or equal to a second specified differential pressure; and if the second differential pressure information is less than or equal to the second specified differential pressure, control the second switch valve V2 and the third switch valve V3 to be closed, to stop backwashing the first Y-shaped strainer 3, where in this case, only the second Y-shaped strainer 4 performs filtering working, and this is equivalent to the first working mode of the filtering system 700; or if the second differential pressure information is not less than or equal to the second specified differential pressure, start the filter screen cleaning apparatus 6, where in this case, the filter screen cleaning apparatus 6 is used when the first Y-shaped strainer is backwashed, to increase cleaning strength of the filtering system 700, so as to enable cleaning effect of the first Y-shaped strainer 3 to meet a standard. In this solution, in an unnecessary case, the filter screen cleaning apparatus 6 may not be started, to save energy, reduce working duration of the filter screen cleaning apparatus 6, and improve a service life of the filter screen cleaning apparatus 6.

In this embodiment of this application, considering that the strainer may be seriously dirty and blocked, after starting the filter screen cleaning apparatus 6, the controller is further configured to: after starting the filter screen cleaning apparatus 6 for n^{th} third duration, determine whether the second differential pressure information is less than or equal to the second specified differential pressure; and if the second differential pressure information is less than or equal to the second specified differential pressure, control the second switch valve V2 and the third switch valve V3 to be closed, to stop backwashing the first Y-shaped strainer 3; or if the second differential pressure information is not less than or equal to the second specified differential pressure, after (n+1)^{th} third duration, determine whether the second differential pressure information is less than or equal to the second specified differential pressure, and if the second differential pressure information is less than or equal to the second specified differential pressure, control the second switch valve V2 and the third switch valve V3 to be closed, to stop backwashing the first Y-shaped strainer 3, where n is a positive integer starting from 1, and n is cycled until the following case exists: when n is less than a specified value, the second switch valve V2 is controlled to be closed, and backwashing of the first Y-shaped strainer 3 is stopped, or when n is equal to a specified value, the first Y-shaped strainer 3 is removed for washing or is replaced. In other words, within a specified quantity range, after each third duration, the controller determines that whether the second differential pressure information is less than or equal to the second specified differential pressure. If the second differential pressure information is less than or equal to the second specified differential pressure, the controller considers that the first Y-shaped strainer 3 meets the cleaning criterion, and may stop backwashing of the first Y-shaped strainer 3, and close an auxiliary cleaning apparatus running synchronously: the ultrasonic generator 5 and the filter screen cleaning apparatus 6. If the second differential pressure information is not less than or equal to the second specified differential pressure, the controller maintains a current cleaning level, and performs determining after next third duration until the controller considers, after a specified quantity of duration, that the cleaning effect of the first Y-shaped strainer 3 cannot meet the standard in a current automatic cleaning manner of the strainer, where the quantity is equal to the specified value. In this case, the controller similarly stops backwashing the first Y-shaped strainer 3, and stops an auxiliary cleaning apparatus running synchronously: the ultrasonic generator 5 and the filter screen cleaning apparatus 6, to remove, for washing, or replace the first Y-shaped strainer 3. In other words, manual participation is required in the cleaning process of the strainer.

In a specific embodiment, the first Y-shaped strainer 3 and the second Y-shaped strainer 4 may be used alternately. In other words, after the first Y-shaped strainer 3 is dirty and blocked, the first Y-shaped strainer 3 is cleaned, and the second Y-shaped strainer 4 performs filtering working. After the cleaning process of the first Y-shaped strainer is completed, the cleaning process of the first Y-shaped strainer 3 is stopped, but only the second Y-shaped strainer 4 still performs filtering working. After the second Y-shaped strainer 4 is dirty and blocked, the second Y-shaped strainer 4 is cleaned based on the cleaning process of the first Y-shaped strainer 3 in the foregoing embodiment, and the second Y-shaped strainer 4 is replaced with the first Y-shaped strainer 3 to perform filtering working. After the cleaning process of the second Y-shaped strainer is completed, the cleaning process of the second Y-shaped strainer 4 is stopped, but only the first Y-shaped strainer 3 still performs filtering working until the first Y-shaped strainer 3 is dirty and blocked. In this case, the first Y-shaped strainer 3 is replaced with the second Y-shaped strainer 4, and so on. In this embodiment, the ultrasonic generator 5 and the filter screen cleaning apparatus 6 may be disposed in both the first Y-shaped strainer 3 and the second Y-shaped strainer 4.

Alternatively, the first Y-shaped strainer 3 may be used as a primary strainer, and the second Y-shaped strainer 4 may be used as a secondary strainer. In other words, after the first Y-shaped strainer 3 is dirty and blocked, the first Y-shaped strainer 3 is cleaned, and the second Y-shaped strainer 4 performs filtering working. After the cleaning process of the first Y-shaped strainer is completed, filtering working of the second Y-shaped strainer 4 is stopped, and the first Y-shaped strainer 3 continues to perform filtering working. In this solution, the ultrasonic generator 5 and the filter screen cleaning apparatus 6 may be disposed only in the first Y-shaped strainer 3, to help reduce costs of the filtering system 700. In addition, during replacement, only the primary strainer needs to be frequently replaced, and a service life of the secondary strainer is long.

When the first Y-shaped strainer 3 is used as a primary strainer and the second Y-shaped strainer 4 is used as a secondary strainer, the third working mode may be started after backwashing of the first Y-shaped strainer 3 is stopped, in other words, after the cleaning effect of the first Y-shaped strainer 3 meets the standard, as shown in FIG. 6. The foregoing controller may be further configured to: control the first switch valve V1, the second switch valve V2, the fifth switch valve V5, and the sixth switch valve V6 to be opened, and control the third switch valve V3 and the fourth switch valve V4 to be closed, to start the first Y-shaped strainer 3 to perform filtering working, and backwash the second Y-shaped strainer 4. After the cleaning effect of the second Y-shaped strainer 4 meets the standard, the first working mode is started again, as shown in FIG. 4. In other words, cleaning of the second Y-shaped strainer 4 is stopped, and the second Y-shaped strainer 4 is used as a secondary strainer, so that the first Y-shaped strainer 3 continues to perform filtering working, and is used as a primary strainer.

FIG. 12 is a schematic diagram of another structure of a filtering system according to an embodiment of this application. As shown in FIG. 12, the filtering system 700 further includes a seventh pipeline G7. The seventh pipeline G7 is connected between the second pipeline G2 and the fourth pipeline G4, in other words, the seventh pipeline G7 is connected between the rear of the first Y-shaped strainer 3 and the front of the second Y-shaped strainer 4. The front refers to a flow-in direction that is of liquid and that exists when the strainer performs filtering working, and the rear refers to a flow-out direction that is of liquid and that exists when the strainer performs filtering working. A seventh switch valve is disposed in the seventh pipeline G7.

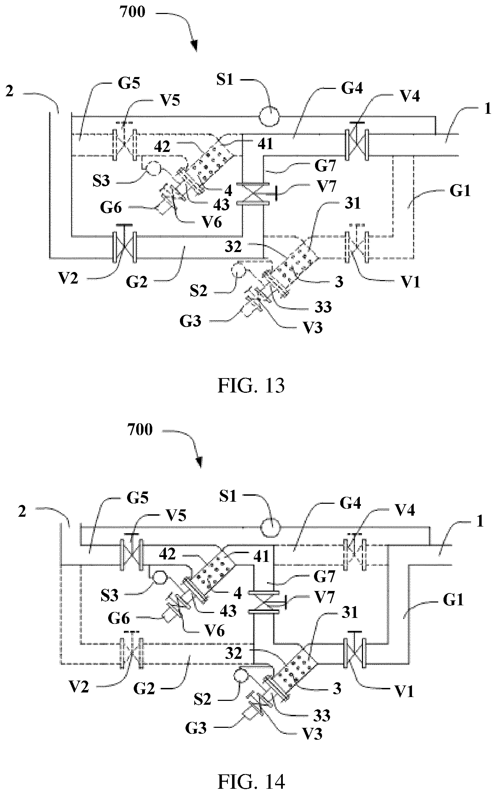

FIG. 13 is a schematic diagram of a fourth working mode of a filtering system according to an embodiment of this application. In the embodiment shown in FIG. 13, in the fourth working mode, the second switch valve V2, the fourth switch valve V4, and the seventh switch valve are opened, and the first switch valve V1, the third switch valve V3, the fifth switch valve V5, and the sixth switch valve V6 are closed. After entering the filtering system 700 from the total liquid inlet 1, the liquid successively passes through the fourth pipeline G4, the seventh pipeline G7, and the second pipeline G2, and flows out of the filtering system 700 from the total liquid outlet 2. In other words, both the first Y-shaped strainer 3 and the second Y-shaped strainer 4 do not participate in filtering working. The fourth working mode is mainly applicable to a scenario in which cleanliness of liquid is high or an end system using the filtering system 700 does not have a high cleanliness requirement on liquid, and a scenario in which the filtering system 700 has been configured for a liquid source, a filtering effect meets a standard, and no further filtering is required.

FIG. 14 is a schematic diagram of a fifth working mode of a filtering system according to an embodiment of this application. In the embodiment shown in FIG. 14, in the fifth working mode, the first switch valve V1, the fifth switch valve V5, and the seventh switch valve are opened, and the second switch valve V2, the third switch valve V3, the fourth switch valve V4, and the sixth switch valve V6 are closed. After entering the filtering system 700 from the total liquid inlet 1, the liquid successively passes through the first pipeline G1, the first Y-shaped strainer 3, the seventh pipeline G7, the second Y-shaped strainer 4, and the fifth pipeline G5, and flows out of the filtering system 700 from the total liquid outlet 2. In other words, the first Y-shaped strainer 3 and the second Y-shaped strainer 4 successively participate in filtering working, and a filtering capability of the filtering system 700 is strong. The fifth working mode is mainly applicable to a scenario in which cleanliness of liquid is low or an end system using the filtering system 700 has a high cleanliness requirement on liquid.

In this solution, the filtering system 700 has a large quantity of working modes, and therefore there are a large quantity of scenarios to which the filtering system 700 can be applied, to help improve flexibility and adaptability of the filtering system 700.

The seventh switch valve in the foregoing embodiment may be manually controlled, that is, the foregoing working mode is manually selected. The seventh switch valve may further be an electrically driven switch valve such as an electric valve or an electromagnetic valve. The seventh switch valve is connected to the controller, and the controller may automatically select and control a current working mode based on a current application scenario.

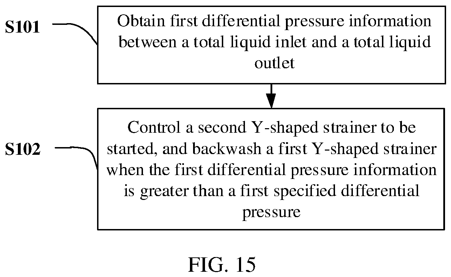

Based on a same inventive concept, this application provides a cleaning method for a filtering system. The cleaning method is mainly used for the filtering system in the foregoing embodiment. Certainly, the cleaning method may be applied to another filtering system when a structure of the filtering system can support the cleaning method. This is not limited in this application. The following mainly describes, by using the filtering system in the foregoing embodiment as an example, the cleaning method for a filtering system provided in the embodiments of this application. FIG. 15 is a flowchart of a cleaning method for a filtering system according to an embodiment of this application. Refer to FIG. 15. The cleaning method for a filtering system includes the following steps:

Step S101: Obtain first differential pressure information between a total liquid inlet and a total liquid outlet.

Specifically, a first differential pressure detection apparatus may be disposed between the total liquid inlet and the total liquid outlet. The first differential pressure detection apparatus may detect the first differential pressure information between the total liquid inlet and the total liquid outlet.

Step S102: Control a second Y-shaped strainer to be started, and backwash a first Y-shaped strainer when the first differential pressure information is greater than a first specified differential pressure.

In this solution, it is considered that when the filtering system starts to work, the first Y-shaped strainer is in a start state and performs filtering working. When the first differential pressure information is greater than the first specified differential pressure, it may be considered that the first Y-shaped strainer has been blocked, and a filter screen of the first Y-shaped strainer needs to be cleaned. In this case, the second Y-shaped strainer may be started to perform filtering working, and the first Y-shaped strainer is backwashed. This is equivalent to the second working mode in the foregoing embodiment. In this solution, the first Y-shaped strainer may be cleaned without shutting down the system. In addition, the first Y-shaped strainer does not need to be disassembled, and the first Y-shaped strainer may be directly cleaned online. This is time-saving and labor-saving, and reduces liquid leakage of the filtering system.

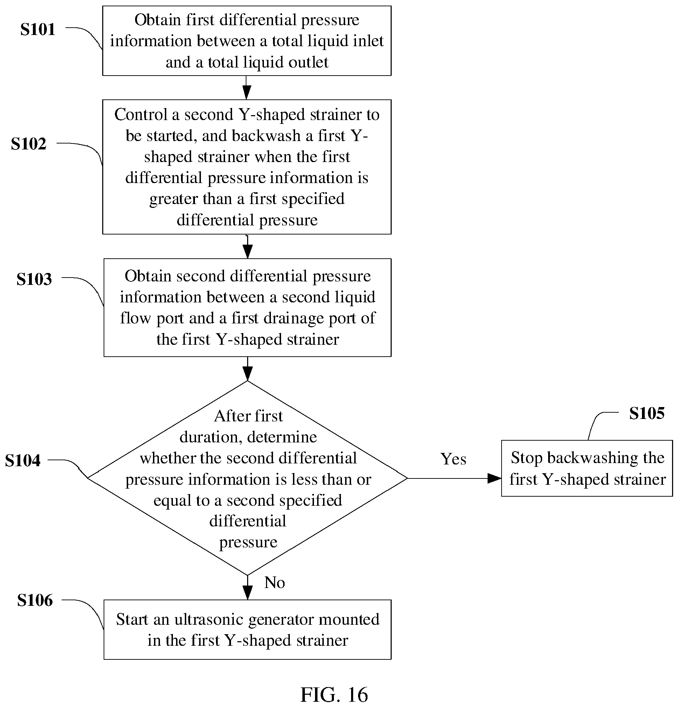

FIG. 16 is another flowchart of a cleaning method for a filtering system according to an embodiment of this application. Refer to FIG. 16. After step S102, the cleaning method further includes the following steps:

Step S103: Obtain second differential pressure information between a second liquid flow port and a first drainage port of the first Y-shaped strainer.

Specifically, a second differential pressure detection apparatus may be disposed between the second liquid flow port and the first drainage port of the first Y-shaped strainer. The second differential pressure detection apparatus may detect the second differential pressure information between the second liquid flow port and the first drainage port, and is configured to determine whether a backwashing effect of the first Y-shaped strainer meets a standard.

Step S104: After first duration, determine whether the second differential pressure information is less than or equal to a second specified differential pressure; and if the second differential pressure information is less than or equal to the second specified differential pressure, perform step S105; or if the second differential pressure information is not less than or equal to the second specified differential pressure, perform step S106.

Step S105: Stop backwashing the first Y-shaped strainer.

When the second differential pressure information is less than or equal to the second specified differential pressure, it is considered that the first Y-shaped strainer meets the cleaning criterion, and cleaning of the first Y-shaped strainer may be stopped. Otherwise, the first Y-shaped strainer needs to continue to be cleaned. A specific value of the first duration may be specifically set based on a structure of a product, a feature of to-be-filtered liquid, and the like.

Step S106: Start an ultrasonic generator mounted in the first Y-shaped strainer.

When the second differential pressure information is greater than the second specified differential pressure, it is considered that the first Y-shaped strainer does not meet the cleaning criterion, and cleaning strength needs to be increased. In this case, the ultrasonic generator may be started, so that dirt on the filter screen can be loosened through vibration of an ultrasonic wave, and can be backwashed.

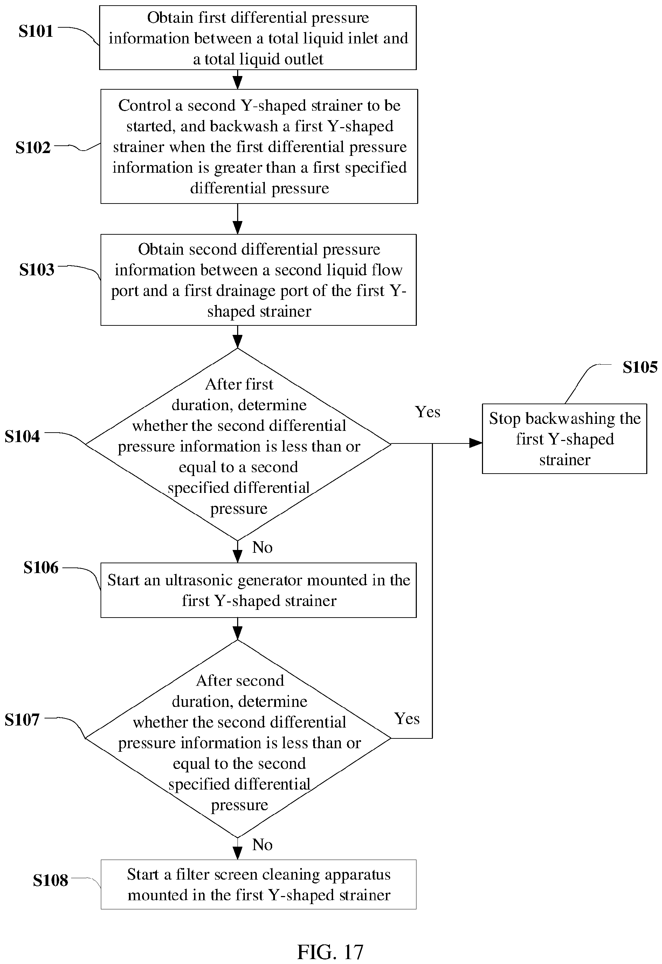

FIG. 17 is another flowchart of a cleaning method for a filtering system according to an embodiment of this application. Refer to FIG. 17. After step S106, the cleaning method further includes the following steps:

Step S107: After second duration, determine whether the second differential pressure information is less than or equal to the second specified differential pressure; and if the second differential pressure information is less than or equal to the second specified differential pressure, perform step S105; or if the second differential pressure information is not less than or equal to the second specified differential pressure, perform step S108.

When the second differential pressure information is less than or equal to the second specified differential pressure, it is considered that the first Y-shaped strainer meets the cleaning criterion, and cleaning of the first Y-shaped strainer may be stopped. Otherwise, the first Y-shaped strainer needs to continue to be cleaned. A specific value of the second duration may be specifically set based on a structure of a product, a feature of to-be-filtered liquid, and the like.

Step S108: Start a filter screen cleaning apparatus mounted in the first Y-shaped strainer.

After the second duration, if the first Y-shaped strainer still cannot meet the cleaning criterion, the cleaning strength needs to continue to be increased. In this case, the filter screen cleaning apparatus may be started to directly brush a surface of the filter screen, so that the dirt on the filter screen falls off, and can be backwashed.

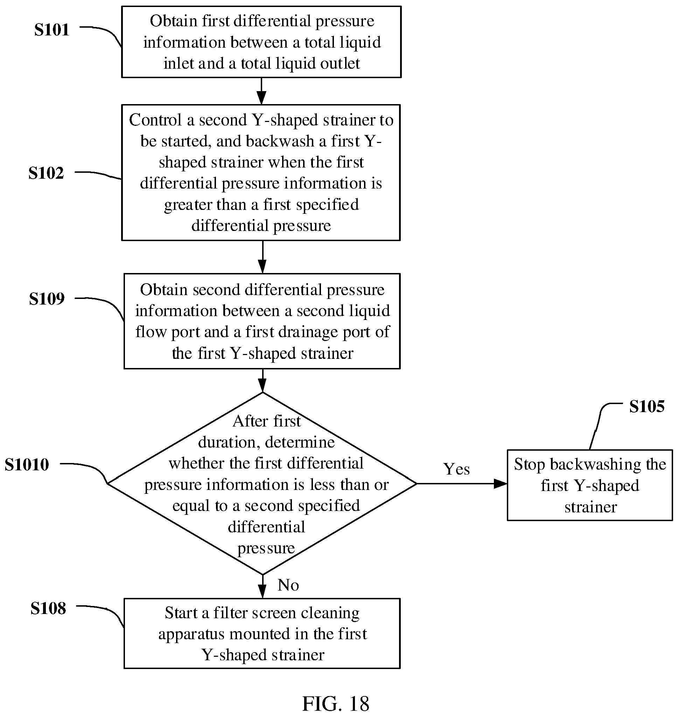

FIG. 18 is another flowchart of a cleaning method for a filtering system according to an embodiment of this application. Refer to FIG. 18. In another embodiment, after step S102, the cleaning method may further include the following steps:

Step S109: Obtain second differential pressure information between a second liquid flow port and a first drainage port of the first Y-shaped strainer.

Step S 1010: After first duration, determine whether the second differential pressure information is less than or equal to a second specified differential pressure; and if the second differential pressure information is less than or equal to the second specified differential pressure, perform step S105; or if the second differential pressure information is not less than or equal to the second specified differential pressure, perform step S108.

In other words, in this embodiment, after the first Y-shaped strainer is backwashed for the first duration, if the cleaning criterion is not met, a filter screen cleaning apparatus may be directly started.

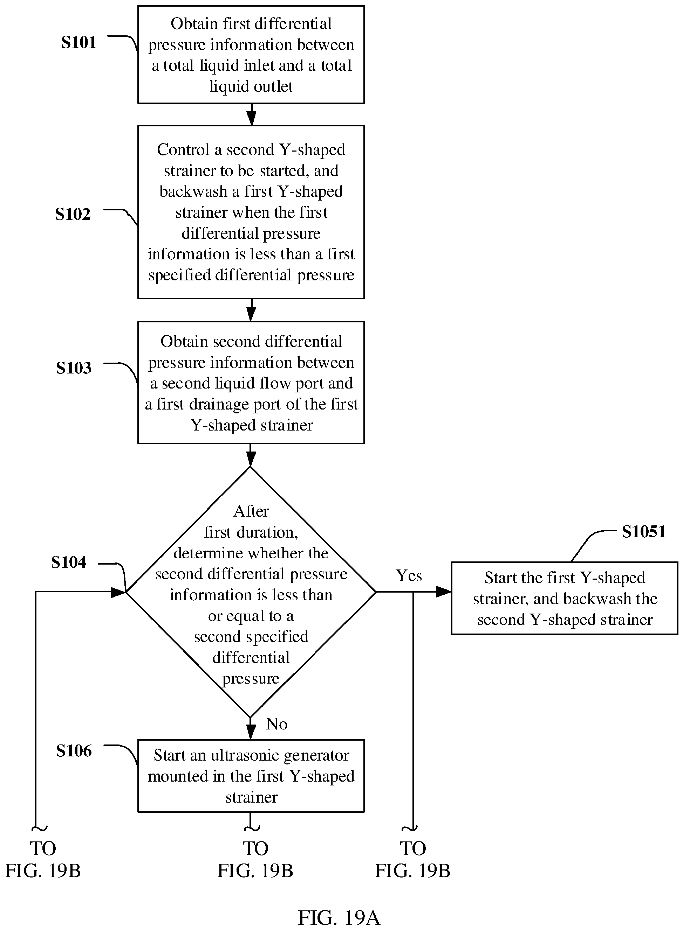

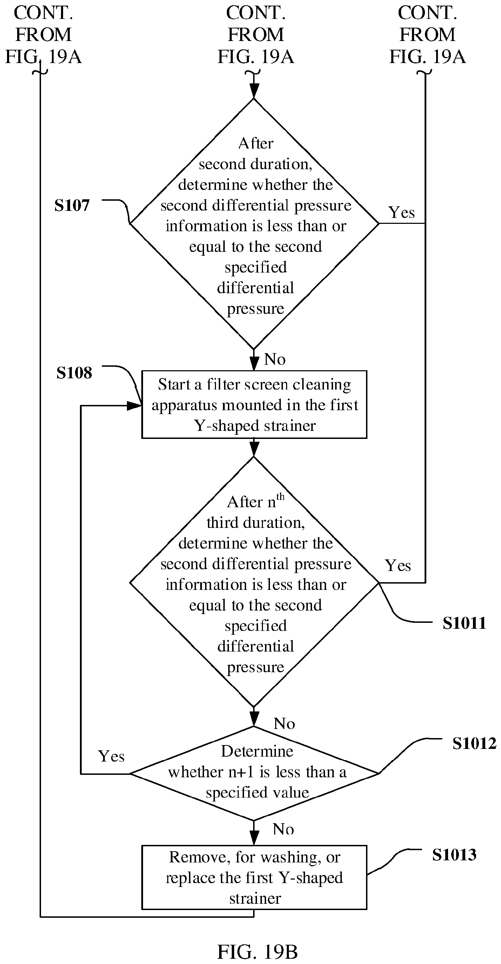

FIG. 19A and FIG. 19B are another flowchart of a cleaning method for a filtering system according to an embodiment of this application. Refer to FIG. 18. In another embodiment, after step S108, the cleaning method may further include the following steps:

Step S1011: After n^{th} third duration, determine whether the second differential pressure information is less than or equal to the second specified differential pressure; and if the second differential pressure information is less than or equal to the second specified differential pressure, perform step S105; or if the second differential pressure information is not less than or equal to the second specified differential pressure, perform step S1012.

Step S1012: Determine whether n+1 is less than a first specified value; and if n+1 is less than the first specified value, n=n+1, and perform step S108; or if n+1 is not less than the first specified value, perform step S1013.

In the foregoing step, n is apositive integer starting from 1. Each time step S1012 is performed, n is increased by 1, and a result is used as n when step S1011 is performed next time.

Step S1013: Remove, for washing, or replace the first Y-shaped strainer.

After the first Y-shaped strainer is continuously cleaned for n third duration, if the first Y-shaped strainer still does not meet the cleaning criterion, it is considered that the first Y-shaped strainer cannot meet the cleaning criterion through online cleaning, and a problem that the first Y-shaped strainer is dirty and blocked needs to be dealt with through manual participation, where n is the first specified value.

Still refer to FIG. 19A and FIG. 19B. In another embodiment, after step S1013, step S104 may be further performed to determine whether a use requirement is met by removing, for washing, or replacing the first Y-shaped strainer, so that no further cleaning is required, and the first Y-shaped strainer can participate in working of the filtering system.

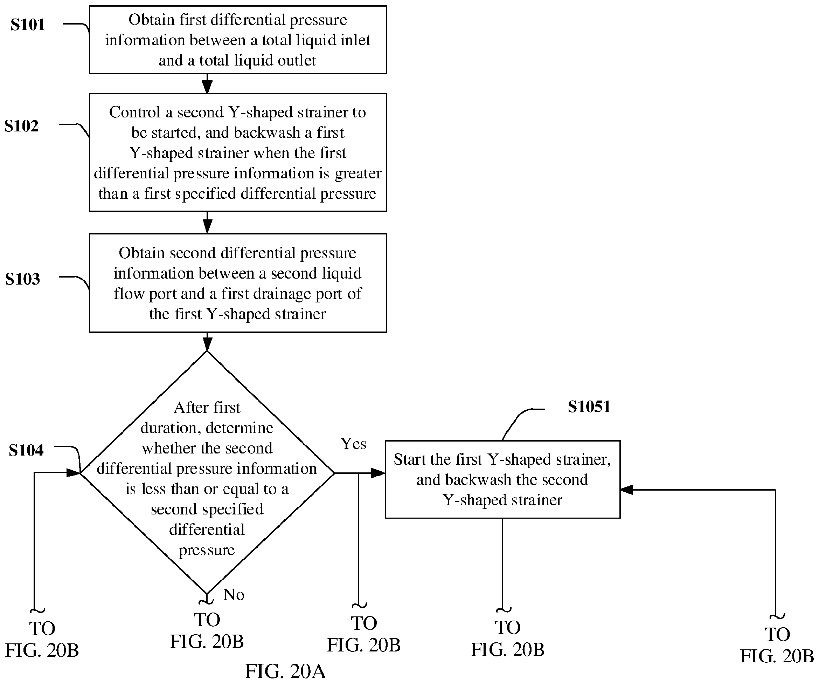

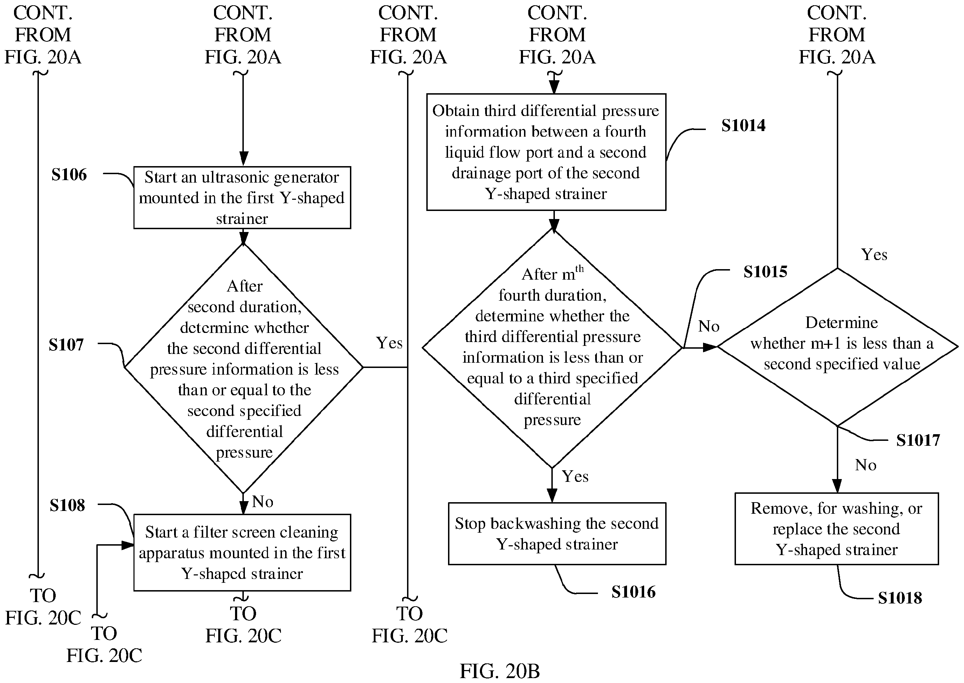

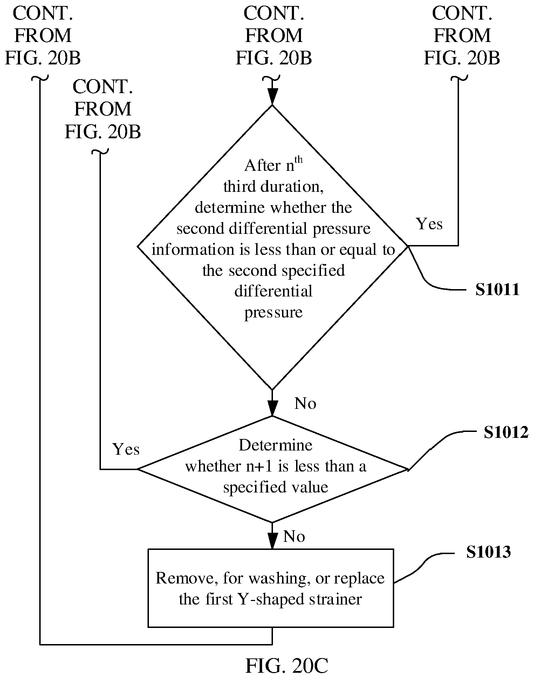

FIG. 20A, FIG. 20B, and FIG. 20C are another flowchart of a cleaning method for a filtering system according to an embodiment of this application. Refer to FIG. 20A. Step S105 specifically includes step S 1051: Start the first Y-shaped strainer, and backwash the second Y-shaped strainer.

In other words, when cleaning of the first Y-shaped strainer is stopped, the first Y-shaped strainer may participate in filtering working of the filtering system, and the second Y-shaped strainer is backwashed. In this solution, it is equivalent to considering the first Y-shaped strainer as a primary strainer and the second Y-shaped strainer as a secondary strainer.

Still refer to FIG. 20A, FIG. 20B, and FIG. 20C. After step S1051, the cleaning method may further include the following steps:

Step S1014: Obtain third differential pressure information between a fourth liquid flow port and a second drainage port of the second Y-shaped strainer.

Step S1015: After m^{th} fourth duration, determine whether the third differential pressure information is less than or equal to a third specified differential pressure; and if the third differential pressure information is less than or equal to the third specified differential pressure, perform step S1016; or if the third differential pressure information is not less than or equal to the third specified differential pressure, perform step S1017.

Step S1016: Stop backwashing the second Y-shaped strainer.

Step S1017: Determine whether m+1 is less than a second specified value; and if m+1 is less than the second specified value, m=m+1, and perform step S1051; or if m+1 is not less than the second specified value, perform step S1018.

In the foregoing step, m is a positive integer starting from 1. Each time step S1017 is performed, m is increased by 1, and a result is used as m when step S1015 is performed next time.

Step S1018: Remove, for washing, or replace the second Y-shaped strainer. A process of step S1014 to step S1018 is similar to a process of step S1011 to S1013 in the foregoing embodiment, and details are not described herein again.

## Claims

1. A filtering system, comprising a total liquid inlet, a first Y-shaped strainer, a second Y-shaped strainer, and a total liquid outlet, wherein
the first Y-shaped strainer comprises a first liquid flow port, a second liquid flow port, and a first drainage port, the first liquid flow port is connected to the total liquid inlet by using a first pipeline, the second liquid flow port is connected to the total liquid outlet by using a second pipeline, and the first drainage port is connected to a first waste liquid area by using a third pipeline;
the second Y-shaped strainer comprises a third liquid flow port, a fourth liquid flow port, and a second drainage port, the third liquid flow port is connected to the total liquid inlet by using a fourth pipeline, the fourth liquid flow port is connected to the total liquid outlet by using a fifth pipeline, and the second drainage port is connected to a second waste liquid area by using a sixth pipeline; and
a first switch valve is disposed in the first pipeline, a second switch valve is disposed in the second pipeline, a third switch valve is disposed in the third pipeline, a fourth switch valve is disposed in the fourth pipeline, a fifth switch valve is disposed in the fifth pipeline, and a sixth switch valve is disposed in the sixth pipeline.

2. The filtering system according to claim 1, further comprising a first differential pressure detection apparatus, a second differential pressure detection apparatus, and a third differential pressure detection apparatus, wherein the first differential pressure detection apparatus is connected between the total liquid inlet and the total liquid outlet, the second differential pressure detection apparatus is connected between the second pipeline and the third pipeline, and the third differential pressure detection apparatus is connected between the fifth pipeline and the sixth pipeline.

3. The filtering system according to claim 1, wherein an ultrasonic generator is further disposed in the first Y-shaped strainer and/or the second Y-shaped strainer.

4. The filtering system according to any one of claims 1 to 3, further comprising a filter screen cleaning apparatus, wherein the filter screen cleaning apparatus is disposed in a strainer, the filter screen cleaning apparatus comprises a drive component and a brush connected to the drive component, the brush is in contact with a filter screen of the strainer, the drive component drives the brush to move on a surface of the filter screen, and the strainer comprises the first Y-shaped strainer and/or the second Y-shaped strainer.

5. The filtering system according to claim 4, wherein the brush is an annular brush, the annular brush is sleeved on a peripheral side of the filter screen, and the drive component drives the annular brush to move in an axial direction of the filter screen; or
the brush is a strip brush, the strip brush extends in an axial direction of the filter screen, and the drive component drives the strip brush to move in a circumferential direction of the filter screen.

6. The filtering system according to claim 4, wherein the filter screen cleaning apparatus comprises an electromagnet, an annular slider, an annular brush, a reset member, and a power supply component; the annular brush is fastened to the annular slider; the strainer comprises a first end and a second end that are located at two ends in an axial direction of the filter screen; the electromagnet is disposed at the first end; the reset member is connected between the annular slider and the strainer; the annular slider is located at the second end when the reset member is in an energy release state; the power supply component controls a current of the electromagnet, to drive the annular slider to move towards the first end, so that the reset member stores energy; and the reset member in an energy storage state is capable of driving the annular slider to move towards the second end.

7. The filtering system according to claim 2, further comprising a controller, wherein the first switch valve, the second switch valve, the third switch valve, the fourth switch valve, the fifth switch valve, and the sixth switch valve are all electrically driven switch valves, and the controller is connected to the first switch valve, the second switch valve, the third switch valve, the fourth switch valve, the fifth switch valve, the sixth switch valve, and the first differential pressure detection apparatus; and
the controller is configured to: obtain first differential pressure information of the first differential pressure detection apparatus, and when the first differential pressure information is greater than a first specified differential pressure, control the second switch valve, the third switch valve, the fourth switch valve, and the fifth switch valve to be opened, and control the first switch valve and the sixth switch valve to be closed, to start the second Y-shaped strainer, and backwash the first Y-shaped strainer.

8. The filtering system according to claim 7, wherein an ultrasonic generator is disposed in the first Y-shaped strainer, the controller is further connected to the ultrasonic generator and the second differential pressure detection apparatus, and the controller is further configured to:
obtain second differential pressure information of the second differential pressure detection apparatus; and
after backwashing the first Y-shaped strainer for first duration, determine whether the second differential pressure information is less than or equal to a second specified differential pressure; and if the second differential pressure information is less than or equal to the second specified differential pressure, control the second switch valve and the third switch valve to be closed, to stop backwashing the first Y-shaped strainer; or if the second differential pressure information is not less than or equal to the second specified differential pressure, start the ultrasonic generator.

9. The filtering system according to claim 8, wherein a filter screen cleaning apparatus is disposed in the first Y-shaped strainer, the controller is further connected to the filter screen cleaning apparatus, and the controller is further configured to:
after starting the ultrasonic generator for second duration, determine whether the second differential pressure information is less than or equal to the second specified differential pressure; and if the second differential pressure information is less than or equal to the second specified differential pressure, control the second switch valve and the third switch valve to be closed, to stop backwashing the first Y-shaped strainer; or if the second differential pressure information is not less than or equal to the second specified differential pressure, start the filter screen cleaning apparatus.

10. The filtering system according to claim 7, wherein a filter screen cleaning apparatus is disposed in the first Y-shaped strainer, the controller is further connected to the filter screen cleaning apparatus, and the controller is further configured to:
obtain second differential pressure information of the second differential pressure detection apparatus; and
after backwashing the first Y-shaped strainer for first duration, determine whether the second differential pressure information is less than or equal to a second specified differential pressure; and if the second differential pressure information is less than or equal to the second specified differential pressure, control the second switch valve and the third switch valve to be closed, to stop backwashing the first Y-shaped strainer; or if the second differential pressure information is not less than or equal to the second specified differential pressure, start the filter screen cleaning apparatus.

11. The filtering system according to claim 9 or 10, wherein after starting the filter screen cleaning apparatus, the controller is further configured to:
after starting the filter screen cleaning apparatus for n^{th} third duration, determine whether the second differential pressure information is less than or equal to the second specified differential pressure; and if the second differential pressure information is less than or equal to the second specified differential pressure, control the second switch valve and the third switch valve to be closed, to stop backwashing the first Y-shaped strainer; or if the second differential pressure information is not less than or equal to the second specified differential pressure, after (n+1)^{th} third duration, determine whether the second differential pressure information is less than or equal to the second specified differential pressure, and if the second differential pressure information is less than or equal to the second specified differential pressure, control the second switch valve and the third switch valve to be closed, to stop backwashing the first Y-shaped strainer, wherein n is a positive integer starting from 1, and n is cycled until the following case exists: when n is less than a specified value, the second switch valve is controlled to be closed, and backwashing of the first Y-shaped strainer is stopped, or when n is equal to the specified value, the first Y-shaped strainer is removed for washing or is replaced.

12. The filtering system according to any one of claims 8 to 11, wherein after stopping backwashing the first Y-shaped strainer, the controller is further configured to:
control the first switch valve, the second switch valve, the fifth switch valve, and the sixth switch valve to be opened, and control the third switch valve and the fourth switch valve to be closed, to start the first Y-shaped strainer, and backwash the second Y-shaped strainer.

13. The filtering system according to claim 1, wherein a seventh pipeline is connected between the second pipeline and the fourth pipeline, and a seventh switch valve is disposed in the seventh pipeline.

14. The filtering system according to claim 1, wherein the first Y-shaped strainer and the second Y-shaped strainer each comprise a filter screen, and a surface of the filter screen comprises a nano mirror coating or a self-cleaning alloy coating.

15. An air conditioning system, comprising a water pump, a heat exchanger set, and the filtering system according to any one of claims 1 to 14, wherein the water pump is connected to the total liquid inlet, and the heat exchanger set is connected to the total liquid outlet.

16. A data center, comprising a cabinet, an electronic device, and the air conditioning system according to claim 15, wherein the electronic device is disposed in the cabinet, and the air conditioning system is configured to control a temperature of the data center.

17. A cleaning method for a filtering system, comprising:
obtaining first differential pressure information between a total liquid inlet and a total liquid outlet; and
controlling a second Y-shaped strainer to be started, and backwashing a first Y-shaped strainer when the first differential pressure information is greater than a first specified differential pressure.

18. The cleaning method according to claim 17, after the controlling a second Y-shaped strainer to be started, and backwashing a first Y-shaped strainer when the first differential pressure information is greater than a first specified differential pressure, comprising:
obtaining second differential pressure information between a second liquid flow port and a first drainage port of the first Y-shaped strainer; and
after first duration, determining whether the second differential pressure information is less than or equal to a second specified differential pressure; and if the second differential pressure information is less than or equal to the second specified differential pressure, stopping backwashing the first Y-shaped strainer; or if the second differential pressure information is not less than or equal to the second specified differential pressure, starting an ultrasonic generator mounted in the first Y-shaped strainer.

19. The cleaning method according to claim 18, after the starting an ultrasonic generator mounted in the first Y-shaped strainer, comprising:
after second duration, determining whether the second differential pressure information is less than or equal to the second specified differential pressure; if the second differential pressure information is less than or equal to the second specified differential pressure, stopping backwashing the first Y-shaped strainer; or if the second differential pressure information is not less than or equal to the second specified differential pressure, starting a filter screen cleaning apparatus mounted in the first Y-shaped strainer.

20. The cleaning method according to claim 17, after the controlling a second Y-shaped strainer to be started, and backwashing a first Y-shaped strainer when the first differential pressure information is greater than a first specified differential pressure, comprising:
obtaining second differential pressure information between a second liquid flow port and a first drainage port of the first Y-shaped strainer; and
after first duration, determining whether the second differential pressure information is less than or equal to a second specified differential pressure; and if the second differential pressure information is less than or equal to the second specified differential pressure, stopping backwashing the first Y-shaped strainer; or if the second differential pressure information is not less than or equal to the second specified differential pressure, starting a filter screen cleaning apparatus mounted in the first Y-shaped strainer.

21. The cleaning method according to claim 19 or 20, after the starting a filter screen cleaning apparatus mounted in the first Y-shaped strainer, comprising:
after n^{th} third duration, determining whether the second differential pressure information is less than or equal to the second specified differential pressure; and if the second differential pressure information is less than or equal to the second specified differential pressure, stopping backwashing the first Y-shaped strainer; or if the second differential pressure information is not less than or equal to the second specified differential pressure, after (n+1)^{th} third duration, determining whether the second differential pressure information is less than or equal to the second specified differential pressure, and if the second differential pressure information is less than or equal to the second specified differential pressure, stopping backwashing the first Y-shaped strainer, wherein n is a positive integer starting from 1, and n is cycled until the following case exists: when n+1 is less than a first specified value, backwashing of the first Y-shaped strainer is stopped, or when n+1 is equal to the specified value, the first Y-shaped strainer is removed for washing or is replaced.

22. The cleaning method according to any one of claims 18 to 21, wherein the stopping backwashing the first Y-shaped strainer specifically comprises:
starting the first Y-shaped strainer, and backwashing the second Y-shaped strainer.

23. The cleaning method according to claim 22, after the backwashing the second Y-shaped strainer, comprising:
obtaining third differential pressure information between a fourth liquid flow port and a second drainage port of the second Y-shaped strainer; and
after m^{th} fourth duration, determining whether the third differential pressure information is less than or equal to the third specified differential pressure; and if the third differential pressure information is less than or equal to the third specified differential pressure, stopping backwashing the second Y-shaped strainer; or if the third differential pressure information is not less than or equal to the third specified differential pressure, after (m+1)^{th} fourth duration, determining whether the third differential pressure information is less than or equal to the third specified differential pressure, and if the third differential pressure information is less than or equal to the third specified differential pressure, stopping backwashing the second Y-shaped strainer, wherein m is a positive integer starting from 1, and m is cycled until the following case exists: when m is less than a second specified value, backwashing of the second Y-shaped strainer is stopped, or when m is equal to the specified value, the second Y-shaped strainer is removed for washing or is replaced.
